# EUROPÄISCHE PATENTSCHRIFT

(11) **EP 4 181 000 B1**
(45) Veröffentlichungstag und Bekanntmachung des Hinweises auf die Patenterteilung: **04.11.2026**
(21) Anmeldenummer: 21208235.8
(22) Anmeldetag: 15.11.2021
(51) Int. Cl.: G06F 21/51, G06F 21/57, G06F 21/64

(54) **VERFAHREN UND RECHENUMGEBUNG ZUM ERSTELLEN UND ANWENDEN EINES PRÜFALGORITHMUS FÜR RECHENVORGÄNGE**
METHOD AND COMPUTING ENVIRONMENT FOR CREATING AND APPLYING A TEST ALGORITHM FOR COMPUTING OPERATIONS
PROCÉDÉ ET ENVIRONNEMENT DE CALCUL PERMETTANT DE CRÉER ET D'APPLIQUER UN ALGORITHME DE VÉRIFICATION POUR LES PROCESSUS DE CALCUL

(43) Veröffentlichungstag der Anmeldung: 17.05.2023
(73) Patentinhaber: Siemens Mobility GmbH, 80997 München (DE)
(72) Erfinder: Eckelmann-Wendt, Uwe, 38302 Wolfenbüttel (DE); Bolz, Matthias, 38106 Braunschweig (DE); Gerken, Stefan, 38116 Braunschweig (DE); Schallenberg, Andreas, 31224 Peine (DE)
(74) Vertreter: Siemens Patent Attorneys

(56) Entgegenhaltungen:
- US-A1- 2017 244 729
- US-A1- 2018 211 067
- US-A1- 2020 110 905

## Beschreibung

Die Erfindung betrifft ein Verfahren zum Erstellen eines rechnergestützten Prüfalgorithmus für eine Bearbeitung von Applikationen in einer Rechenumgebung mit mindestens einem Hostrechner zum Ausführen einer Vielzahl von auf dem mindestens einen Hostrechner installierten Applikationsprogrammen, unter Berücksichtigung von Konfigurationsdaten für die Applikationsprogramme. Außerdem betrifft die Erfindung ein Verfahren zum rechnergestützten Bearbeiten von Applikationen in einer Rechenumgebung mit mindestens einem Hostrechner durch Ausführen einer Vielzahl von auf dem mindestens einen Hostrechner installierten Applikationsprogrammen, unter Berücksichtigung von Konfigurationsdaten für die Applikationsprogramme. Weiterhin betrifft die Erfindung eine sicherheitsrelevante Rechenumgebung mit einem oder mehreren Hostrechnern. Zuletzt betrifft die Erfindung ein Computerprogrammprodukt sowie eine Bereitstellungsvorrichtung für dieses Computerprogrammprodukt, wobei das Computerprogrammprodukt mit Programmbefehlen zur Durchführung dieses Verfahrens ausgestattet ist.

Grundsätzlich müssen sicherheitsrelevante Systeme, die rechnergestützt in einer sicherheitsrelevanten Rechenumgebung ablaufen, garantieren, dass die richtige Software, konfiguriert mit den richtigen Konfigurationsdaten genutzt wird. Dabei darf weder eine andere Software noch andere Konfigurationsdaten und auch keine anderen als die vorgesehenen Hardwarekomponenten (Hostrechner) verwendet werden. Als sicherheitsrelevant wird im Rahmen dieser Erfindung eine Relevanz für die Betriebssicherheit des Systems verstanden (auch Safety genannt). Beispielsweise gelten Bahnanwendungen als sicherheitsrelevante Systeme im genannten Sinne des Begriffes.

Um sicherheitsrelevante Rechenumgebungen abzusichern, ist es bekannt, dass auf einem Rechner zuverlässig nur die Komponenten installiert werden, welche für die Bearbeitung der betreffenden Applikation verwendet werden. Dies bedeutet unter anderem, dass ältere Versionen einer Software nach einem Update vollständig aus der Rechenumgebung gelöscht werden müssen. Dies kann beispielsweise dadurch erreicht werden, dass der zur Verfügung gestellte Speicherplatz eine parallele Speicherung von Software zweier Versionen aus Gründen der Speicherkapazität nicht zulässt. Hierzu muss die Hardware zumindest hinsichtlich der Speicherkapazität genau auf die Software angepasst sein, welche in der Rechenumgebung läuft.

Gemäß der WO 2014/00924382 ist ein Verfahren und ein Rechner beschrieben, welches/welcher einen Prüfalgorithmus für die Verarbeitung von Applikationen in der durch den Rechner gebildeten Rechenumgebung aufweist. Auf dem Rechner sind Applikationsprogramme installiert, die redundant ausgeführt werden, so dass der Prüfalgorithmus eine Möglichkeit hat, durch einen Vergleich der Berechnungsergebnisse Fehler aufzudecken (allgemein auch Voting genannt). Diese Prüfung deckt jedoch nur die Ergebnisse der Berechnungen ab. Beispielsweise können Hardwarefehler nur dann aufgedeckt werden, wenn diese sich auch auf die Berechnungsergebnisse auswirken, dahingehend, dass unterschiedliche Berechnungsergebnisse entstehen. Wenn die Hardwareprobleme jedoch parallel zu gleichen Fehlern in den parallel durchgeführten Berechnungen führen, bleibt ein solcher Fehler unerkannt.

Die Aufgabe der Erfindung besteht darin, ein Verfahren zum rechnergestützten Erstellen eines Prüfalgorithmus für eine Bearbeitung von Applikationen in einer Rechenumgebung sowie ein Verfahren für eine Verarbeitung von Applikationen in einer Rechenumgebung anzugeben, mit dem sich bei vertretbarem Rechenaufwand möglichst umfassend die fehlerfreie Bearbeitung der Applikation prüfen lässt. Weiterhin ist es Aufgabe der Erfindung, eine sicherheitsrelevante Rechenumgebung anzugeben, die einen oder mehrere Hostrechner aufweist, bei der sich bei vertretbarem Rechenaufwand möglichst umfassend die fehlerfreie Bearbeitung von Applikationen prüfen lässt. Außerdem besteht die Aufgabe der Erfindung darin, ein Computerprogrammprodukt sowie eine Bereitstellungsvorrichtung für dieses Computerprogrammprodukt anzugeben, mit dem das vorgenannte Verfahren durchgeführt werden kann.

Diese Aufgabe wird mit dem eingangs angegebenen Anspruchsgegenstand (Verfahren) erfindungsgemäß dadurch gelöst, dass für jedes Applikationsprogramm die das Applikationsprogramm beschreibenden Daten als Datenabschnitt zusammengefasst werden und die auf das betreffende Applikationsprogramm bezogenen Konfigurationsdaten als Datenabschnitt zusammengefasst werden und dann die Datenabschnitte der Vielzahl von Applikationsprogrammen und der zugehörigen Konfigurationsdaten (das heißt die als Datenabschnitt jeweils auf ein bestimmtes Applikationsprogramm bezogenen Konfigurationsdaten) in einem Datensatz zusammengefasst werden. Bei der Erstellung des Prüfalgorithmus werden die Schritte durchgeführt, dass der Datensatz (evtl. unter mehreren Datensätzen) identifiziert wird und diesem ein globaler ID Code zuordnet wird und an der Ausführung der Applikationsprogramme des Datensatzes beteiligte Komponenten der Rechenumgebung identifiziert werden. Dabei wird jedem als Komponente identifizierten Hostrechner jeweils ein Host ID Code zugeordnet oder ein zugeordneter Host ID Code ausgelesen und den als Komponenten identifizierten Applikationsprogrammen ein Programm ID Code zugeordnet oder ein zugeordneter Programm ID Code ausgelesen. Auf jeden der im Datensatz enthaltenen Datenabschnitte wird eine Hashfunktion angewendet und jeweils ein Hashwert erzeugt. Dann wird eine Berechnungsfunktion erstellt, die für jeden Datenabschnitt angewendet wird, indem die Host ID Codes von beteiligten Hostrechnern, die Programm ID Codes von beteiligten Applikationsprogrammen, der Hashwert des betreffenden Datenabschnitts und der globale ID Code durch Rechenoperatoren miteinander verknüpft werden, und dann als Ergebnis der Berechnungsfunktion ein Komplementärcode berechnet und gespeichert wird. Daraus wird eine Prüffunktion erstellt, die für jeden Datenabschnitt anwendbar ist, indem die Host ID Codes der beteiligten Hostrechner, die Programm ID der beteiligten Applikationsprogramme, der Hashwert des betreffenden Datenabschnitts und der zum Datenabschnitt berechnete Komplementärcode durch Rechenoperatoren miteinander verknüpft werden, wobei als Ergebnis der globale ID Code berechenbar ist.

Die zugeordneten ID Codes müssen eindeutig sein, um eine zuverlässige Erkennung der gekennzeichneten Komponenten, d. h. Hardwarekomponenten (Hostrechner, Speichereinrichtungen) oder Softwarekomponenten (Programmkomplexe, Programme, Teilprogramme, Konfigurationsdaten) zu gewährleisten. Dies kann beispielsweise durch jeweils einmalige Vergabe von Zahlencodes erfolgen, deren Vergabe dahingehend überwacht wird, dass ein einmal vergebener Zahlencode nicht noch einmal vergeben werden kann. Programmroutinen, die dies leisten, sind hinreichend bekannt. Eine andere Möglichkeit besteht darin, Zufallszahlen einer hinreichenden Größe zu vergeben (hierzu im Folgenden noch mehr).

Wenn im Zusammenhang mit dieser Erfindung von ID Codes die Rede ist, so sind hiermit die globalen ID Codes, Host ID Codes, Programm ID Codes, Teilprogramm ID Codes und Programmkomplex ID Codes gemeint. Für Aussagen, die für alle diese Codes gelten, wird übergreifend der Begriff ID Code verwendet.

Vorteilhaft bildet das erfindungsgemäße Verfahren die Möglichkeit, dieses verteilt auf mehreren Rechnern durchzuführen. Es kann also nicht nur ein Hostrechner, sondern es können auch mehrere Hostrechner zum Einsatz kommen, um eine durch den Datensatz definierte Aufgabe abzuarbeiten. Dabei ist der eine Hostrechner bzw. sind die mehreren beteiligten Hostrechner Teil der Rechenumgebung. Das Verfahren zum Erstellen des Prüfalgorithmus bildet hierfür die Voraussetzung, damit der Prüfalgorithmus bei der Abarbeitung der durch den Datensatz definierten Aufgabe zum Einsatz kommen kann. Dieses wird durch ein ebenfalls erfindungsgemäßes Verfahren zum rechnergestützten Bearbeiten von Applikationen in einer Rechenumgebung gewährleistet (hierzu im Folgenden noch mehr). Vorteilhaft können hierbei auch kommerzielle Rechner zum Einsatz kommen, sogenannte COTS-Komponenten (COTS steht für Commercial of the Shelf).

Als Applikationsprogramme sollen Programme bezeichnet werden, die eine bestimmte Aufgabe (Applikation) übernehmen. Grundsätzlich lassen sich zwei Kategorien von Applikationsprogrammen unterscheiden. Es gibt Applikationsprogramme, die zur Bewältigung einer Aufgabe bestimmt sind, die mit der Rechenumgebung extern (d. h. außerhalb der Rechenumgebung) zu bewältigen ist. Hierbei kann es sich beispielsweise um Steuerkomponenten einer Bahnanwendung handeln. Derlei Applikationsprogramme werden auch als Nutzprogramme bezeichnet. Dies bezieht sich darauf, dass die Rechenumgebung zum Zwecke der Abarbeitung einer externen Aufgabe Nutzen bringen soll.

Die zweite Kategorie von Applikationsprogrammen betrifft Applikationen, die zur Organisation der Funktion der Rechenumgebung erforderlich sind. Hierbei kann es sich um Dienstprogramme handeln, welche für das Funktionieren der Rechenumgebung erforderlich sind. Beispielsweise kann es sich hierbei um Programme handeln, die die Kommunikation zwischen einzelnen Hostrechnern ermöglichen.

Als Konfigurationsdaten sollen Daten verstanden werden, welche Applikationsprogramme für die individuellen Anforderungen des vorliegenden Anwendungsfalls konfigurieren. Die Konfiguration beinhaltet das Zusammenspiel verschiedener Applikationsprogramme untereinander sowie die Funktion der Applikationsprogramme auf den Hardwarekomponenten, auf denen diese installiert sind. Außerdem enthält die Konfiguration Anpassungen auf den vorliegenden Anwendungsfall, für welchen das betreffende Applikationsprogramm gedacht ist (beispielsweise Parameter, die sich in verschiedenen Anwendungsfällen unterscheiden können).

Unter einem Datensatz im Sinne der Anmeldung soll einer Sammlung von Daten verstanden werden, deren Umfang eindeutig definiert ist. Insbesondere lässt sich der Datensatz durch Adressierung eindeutig von einem Datenträger auslesen oder auf diesen schreiben. Der Datensatz besteht aus mehreren Datenabschnitten, die gemeinsam den Datensatz ergeben. Auch die Datenabschnitte sind derart adressiert, dass diese sich eindeutig von einem Datenträger auslesen lassen oder auf diesen schreiben lassen. Programme und Konfigurationsdaten lassen sich erfindungsgemäß durch einen (gemeint ist damit mindestens einen) Datenabschnitt beschreiben und auf einem Datenträger speichern.

Durch die Adressierung sind somit der Anfang eines Datenabschnittes und das Ende des Datenabschnittes eindeutig definiert. Da ein Datensatz aus mehreren Datenabschnitten besteht, ist auch der Anfang und das Ende des Datensatzes eindeutig definiert. Dies bedeutet, dass sich der Datenabsatz sowie auch einzelne Datenabschnitte von einem Datenträger auslesen lassen und immer denselben Inhalt aufweisen. Dies schafft die Möglichkeit, Fehler im Datensatz zu identifizieren, die ungewollt auftreten können (zum Beispiel Bitkipper). Beispielsweise lässt sich auf die Datenabschnitte eine Hashfunktion anwenden, die unter der Voraussetzung, dass keine Fehler aufgetreten sind, immer denselben Hashwert ergeben müssen. Daraus kann geschlossen werden, dass in dem Datenabschnitt ein Fehler vorliegt, wenn sich der Hashwert ändert.

Durch Anwendung einer Hashfunktion lässt sich also mit anderen Worten die Integrität von gespeicherten Daten feststellen, die grundsätzlich nicht verändert werden sollen. Denn dies bedeutet, dass sich auch der mittels der Hashfunktion ermittelte Hashwert nicht verändern darf.

Zusätzlich können Fehler auftreten, wenn beispielsweise ein falsches Applikationsprogramm oder die falsche Version eines bestimmten Applikationsprogramms oder falsche Konfigurationsdaten von Applikationsprogrammen verwendet werden. Dasselbe gilt auch für Teilprogramme des Applikationsprogramms oder für Programmkomplexe, welche eine Kombination verschiedener Applikationsprogramme darstellen. Auch Teilprogramme und Programmkomplexe können mit Konfigurationsdaten verknüpft sein, welche sich ebenfalls nicht ändern dürfen.

Unabhängig davon, dass die Datenabschnitte überwacht werden müssen, ist also auch eine Überwachung der Verwendung richtiger Hardwarekomponenten sowie richtiger Softwarekomponenten erforderlich. Dies erfolgt erfindungsgemäß dadurch, dass an der Abarbeitung einer Applikation, vorgegeben durch den zugehörigen Datensatz, eine definierte Anzahl von Hardwarekomponenten und Softwarekomponenten beteiligt ist, denen jeweils ein ID Code zugeordnet wurde. Die ID Codes können dann bei der Abarbeitung von Aufgaben mittels des Datensatzes überprüft werden. Stimmen die ID Codes nicht, kann ein Fehler ausgegeben werden.

Erfindungsgemäß soll die Prüfung einer fehlerfreien Abarbeitung der Aufgabe (Applikation) durch einen Prüfalgorithmus erfolgen, der zu diesem Zweck über eine Prüffunktion verfügt (zur Anwendung des Prüfalgorithmus im Folgenden noch mehr). Um die Prüffunktion zu erstellen, verwendet das erfindungsgemäße Verfahren zum Erstellen des rechnergestützten Prüfalgorithmus erfindungsgemäß eine Berechnungsfunktion. In dieser Berechnungsfunktion werden die ID Codes aller beteiligten Hardwarekomponenten und Softwarekomponenten für jeden der im Datensatz verwendeten Datenabschnitte und ein zum jeweiligen Datenabschnitt gehöriger Hashwert durch Rechenoperatoren miteinander verknüpft. Eine Verknüpfung mit einem weiteren Rechenoperator erfolgt zu dem globalen ID Code, der dem durch die zu prüfenden Datenabschnitte gebildeten Datensatz zugeordnet ist.

Durch Ausführung der so ermittelten Berechnungsfunktion lässt sich somit ein Ergebnis berechnen, welches im Zusammenhang mit dieser Erfindung als Komplementärcode bezeichnet wird.

Der Komplementärcode wird dazu verwendet, die Prüffunktion aufzustellen. Auch bei der Prüffunktion sind die ID Codes aller beteiligten Hardwarekomponenten und Softwarekomponenten, im Unterschied zu der Berechnungsfunktion allerdings nicht der globale ID Code, sondern der Komplementärcode des betreffenden Datenabschnitts durch die oben genannten Rechneroperatoren miteinander verknüpft. Dies bedeutet, dass sich durch Anwendung der Prüffunktion unter der Voraussetzung, dass keine Fehler bei der Bearbeitung der Applikation vorliegen, der globale ID Code ergeben muss, und zwar für alle geprüften Datenabschnitte eines Datensatzes. Dass für alle Prüffunktionen als Ergebnis immer der globale ID Code des zugehörigen Datensatzes ermittelbar ist, wird durch den jeweils mittels der Berechnungsfunktion erzeugten Komplementärcode sichergestellt.

Die Prüffunktion schafft somit erfindungsgemäß eine zuverlässige Möglichkeit, um mit vergleichsweise geringem Rechenaufwand die fehlerfreie Konfiguration einer Rechenumgebung (richtige und unverfälschte Software auf der richtigen, dafür vorgesehenen Hardware) für die Abarbeitung einer Applikation zu überprüfen. Hierbei werden sowohl Hardwarekomponenten in die Prüfung einbezogen als auch Softwarekomponenten, deren Daten bei der Abarbeitung der Applikation nicht verändert werden. Da sich diese Daten allerdings zufällig verändern können, wird dies durch Anwendung der Hashfunktion sichergestellt, die ungewollte Datenänderungen aufdeckt. Die Verwendung der richtigen Hardwarekomponenten und Softwarekomponenten wird überdies durch ID Codes sichergestellt, die eine eindeutige Identifikation der verwendeten Hardwarekomponenten und Softwarekomponenten gewährleistet.

Lediglich Daten, die durch Anwendung der Rechenumgebung verändert werden sollen (Berechnungsergebnisse, digitalisierte Messwerte, Eingaben, variable zu berücksichtigende Erfordernisse der Applikation) lassen sich mit der erfindungsgemäßen Prüffunktion nicht überprüfen. Diese Daten können jedoch in an sich bekannter Weise durch Schaffung von Redundanz abgesichert werden. Beispielsweise ist es möglich, diese Daten in mehreren, vorzugsweise drei parallelen Prozessabläufen zu berechnen und die Ergebnisse anschließend im Rahmen eines Votings zu vergleichen. Die Ergebnisse werden nur dann als vertrauenswürdig eingestuft, wenn zumindest die Mehrheit der verglichenen Ergebnisse übereinstimmt. Die parallele Abarbeitung einer Applikation durch die Rechenumgebung kann dabei insbesondere durch drei parallel bearbeitete Datensätze in der Rechenumgebung durchgeführt werden. Hierdurch kann vorteilhaft sichergestellt werden, dass die Bearbeitung eines Datensatzes jeweils rückkopplungsfrei bezüglich der anderen Bearbeitungen durchgeführt werden kann. Damit kann vorteilhaft die Wahrscheinlichkeit so weit wie möglich verringert werden, dass das Auftreten von Fehlern in der Bearbeitung eines Datensatzes sich auch auf die Bearbeitung anderer Datensätze auswirkt.

Natürlich ist die Möglichkeit eines gegenseitigen Einflusses nicht ganz auszuschließen, weil sich beispielsweise ein Hardwarefehler in einem Hostrechner, der an der Bearbeitung mehrerer Datensätze beteiligt ist, auch parallel auf mehrere Bearbeitungsprozesse auswirken kann. Das Verbesserungspotenzial bezieht sich also lediglich auf die Übernahme von Fehlern aus dem Bearbeitungsprozess eines Datensatzes auf einen anderen. Allerdings kann die Wahrscheinlichkeit, dass Hardwarefehler sich auf die Bearbeitung mehrerer Datensätze auswirken, vorteilhaft weiter verringert werden, wenn jeder Datensatz auf einem anderen Hostrechner bearbeitet wird.

Außerdem ist erfindungsgemäß vorgesehen, dass für jedes Applikationsprogramm, bei dem die das Applikationsprogramm beschreibenden Daten und die auf das betreffende Applikationsprogramm bezogenen Konfigurationsdaten jeweils als Datenabschnitt zusammengefasst sind sowie die Datenabschnitte der Vielzahl von Applikationsprogrammen und der Konfigurationsdaten in einem Datensatz zusammengefasst sind, ein nach dem vorstehend erläuterten Verfahren erstellter Prüfalgorithmus verwendet wird, um für einen Datenabschnitt das Ergebnis der zugehörigen Prüffunktion zu berechnen, das Ergebnis auszugeben oder mit dem globalen ID Code zu vergleichen und das Vergleichsergebnis auszugeben.

Bei den letztgenannten Verfahrensschritten handelt es somit um die Anwendung des Prüfalgorithmus, bei der die im vorstehenden Verfahren erzeugte Prüffunktion zur Prüfung von Verfahren zur rechnergestützten Bearbeitung von Applikationen angewendet wird. Hierdurch werden die vorstehend bereits beschriebenen Vorteile erreicht, die an dieser Stelle nicht noch einmal aufgeführt werden sollen. Es ist möglich, die Abläufe bei der Durchführung des Verfahrens auf Fehler zu untersuchen. Dies erfolgt durch Anwenden des Prüfalgorithmus, der bei einer fehlerfreien Verwendung der Datenabschnitte und einer fehlerfreien Auswahl der Hardwarekomponenten sowie Softwarekomponenten als Ergebnis den globalen ID Code erzeugen muss. Im Umkehrschluss kann von einem Fehler ausgegangen werden, wenn der globale ID Code nicht das Ergebnis der Anwendung der Prüffunktion ist.

Zum Zweck der Identifizierung von Fehlern wird daher das Ergebnis der Prüffunktion ausgegeben. Allerdings gibt es unterschiedliche Ansätze, um Fehler beim rechnergestützten Bearbeiten der Applikationen zu identifizieren.

Es ist möglich, alle erzeugten Ergebnisse der Prüffunktionen von Datenabschnitten eines Datensatzes miteinander zu vergleichen. Diese müssen bei den Datenabschnitten eines Datensatzes immer dieselbe Global ID Code ergeben. Da die Prüffunktion für jeden Datenabschnitt angewendet wird, stehen eine Vielzahl von Ergebnissen zur Verfügung, sodass auch ohne Kenntnis des globalen ID-Codes indirekt auf eine fehlerfreie Konfiguration der Rechenumgebung geschlossen werden kann, wenn alle Ergebnisse der verschiedenen Prüffunktionen gleich sind.

Wenn einzelne Ergebnisse abweichen, jedoch die Mehrheit der Prüffunktionen dasselbe Ergebnis ergibt, können die Datenabschnitte, bei denen ein Fehler vorliegt, identifiziert werden. Geeignete Maßnahmen können auf dieser Grundlage eingeleitet werden (hierzu im Folgenden noch mehr). Bei der genannten Mehrheit der Ergebnisse kann davon ausgegangen werden, dass die betreffenden Datenabschnitte fehlerfrei waren und mit den richtigen Hardwarekomponenten sowie Softwarekomponenten verknüpft waren. Ein einzige abweichend errechnete globaler ID Code reicht aus, dass dies als Fehler für die gesamte Konfiguration angesehen wird.

Eine andere Möglichkeit besteht darin, die jeweiligen Ergebnisse der Prüffunktion mit dem vorher ermittelten globalen ID Code zu vergleichen. Dieser muss allerdings für einen solchen Vergleich abrufbar sein. Beim Erzeugen eines solchen Vergleichsergebnisses ist der globale ID Code daher bekannt. Um zu verhindern, dass dieser bei der rechnergestützten Bearbeitung der Applikationen aufgrund eines Fehlers auch bei der Abarbeitung der Prüffunktion Verwendung findet, kann dieser in einem durch Hardware oder Software geschützten Bereich der Rechenumgebung gespeichert werden, wobei in diesem geschützten Bereich vorzugsweise auch der Vergleich mit den durch die Prüffunktion erzeugten Ergebnissen erfolgen kann.

Unter "rechnergestützt" oder "computerimplementiert" kann im Zusammenhang mit der Erfindung eine Implementierung des Verfahrens verstanden werden, bei dem mindestens ein Computer oder Prozessor mindestens einen Verfahrensschritt des Verfahrens ausführt.

Unter einer "Rechenumgebung" kann im Zusammenhang mit der Erfindung eine Infrastruktur bestehend aus Computern, Programmen und gespeicherten Daten verstanden werden, die zur Bearbeitung einer Applikation, die eine Aufgabe zu erfüllen hat, verwendet werden.

Der Ausdruck "Hostrechner" oder "Computer" (Computer wird im Zusammenhang mit dieser Erfindung Synonym für Hostrechner verwendet) deckt alle elektronischen Geräte mit Datenverarbeitungseigenschaften ab. Computer können beispielsweise Personal Computer, Server, Handheld-Computer, Mobilfunkgeräte und andere Kommunikationsgeräte, die rechnergestützt Daten verarbeiten, Prozessoren und andere elektronische Geräte zur Datenverarbeitung sein, die vorzugsweise auch zu einem die Rechenumgebung bildenden Netzwerk zusammengeschlossen sein können.

Unter einem "Prozessor" kann im Zusammenhang mit der Erfindung beispielsweise einen Wandler einen Sensor zur Erzeugung von Messsignalen oder eine elektronische Schaltung, verstanden werden. Bei einem Prozessor kann es sich insbesondere um einen Hauptprozessor (engl. Central Processing Unit, CPU), einen Mikroprozessor, einen Mikrocontroller, oder einen digitalen Signalprozessor, möglicherweise in Kombination mit einer Speichereinheit zum Speichern von Programmbefehlen, etc. handeln. Auch kann unter einem Prozessor ein virtualisierter Prozessor oder eine Soft-CPU verstanden werden.

Unter einer "Speichereinheit" kann im Zusammenhang mit der Erfindung beispielsweise ein computerlesbarer Speicher in Form eines Arbeitsspeichers (engl. Random-Access Memory, RAM) oder Datenspeichers (Festplatte oder Datenträger) verstanden werden.

Als "Schnittstellen" können hardwaretechnisch, beispielsweise kabelgebunden oder als Funkverbindung, und/oder softwaretechnisch, beispielweise als Interaktion zwischen einzelnen Programmmodulen oder Programmteilen eines oder mehrerer Computerprogramme, realisiert sein.

Als "Cloud" soll eine Umgebung für ein "Cloud-Computing" (deutsch Rechnerwolke oder Datenwolke) verstanden werden. Gemeint ist eine IT-Infrastruktur, welche über Schnittstellen eines Netzwerks wie das Internet verfügbar gemacht wird. Sie beinhaltet in der Regel Speicherplatz, Rechenleistung oder Software als Dienstleistung, ohne dass diese auf dem die Cloud nutzenden lokalen Computer installiert sein müssen. Die im Rahmen des Cloud-Computings angebotenen Dienstleistungen umfassen das gesamte Spektrum der Informationstechnik und beinhaltet unter anderem Infrastruktur, Plattformen und Software.

Als "Programmmodule" sollen einzelne Funktionseinheiten verstanden werden, die einen erfindungsgemäßen Programmablauf von Verfahrensschritten ermöglichen. Diese Funktionseinheiten können in einem einzigen Computerprogramm oder in mehreren miteinander kommunizierenden Computerprogrammen verwirklicht sein. Die hierbei realisierten Schnittstellen können softwaretechnisch innerhalb eines einzigen Prozessors umgesetzt sein oder hardwaretechnisch, wenn mehrere Prozessoren zum Einsatz kommen.

Sofern es in der nachfolgenden Beschreibung nicht anders angegeben ist, beziehen sich die Begriffe "erstellen", "feststellen", "berechnen", "generieren", "konfigurieren", "modifizieren" und dergleichen vorzugsweise auf Prozesse, die Daten erzeugen und/oder verändern und/oder die Daten in andere Daten überführen. Dabei liegen die Daten insbesondere als physikalische Größen vor, beispielsweise als elektrische Impulse oder auch als Messwerte. Die erforderlichen Anweisungen Programmbefehle sind in einem Computerprogramm als Software zusammengefasst. Weiterhin beziehen sich die Begriffe "senden", "empfangen", "einlesen", "auslesen", "übertragen" und dergleichen auf das Zusammenspiel einzelner Hardwarekomponenten und/oder Softwarekomponenten über Schnittstellen.

Gemäß einer Ausgestaltung der Erfindung ist vorgesehen, dass mindestens ein Applikationsprogramm eine Vielzahl von Teilprogrammen aufweist, wobei für jedes Teilprogramm die das Teilprogramm beschreibenden Daten als Datenabschnitt zusammengefasst werden und die auf das betreffende Teilprogramm bezogenen Konfigurationsdaten als Datenabschnitt zusammengefasst werden, einem als Komponente identifizierten Teilprogramm ein Teilprogramm ID Code zugeordnet oder ein zugeordneter Teilprogramm ID Code ausgelesen wird, bei der Erstellung der Berechnungsfunktion und der Prüffunktion zusätzlich die Teilprogramm ID Codes von beteiligten Teilprogrammen durch einen Rechenoperator verknüpft wird.

Als Teilprogramme im Sinne der Erfindung sind damit kleinere Einheiten wie Programmmodule zu verstehen, deren Gesamtheit das Applikationsprogramm ergeben. Somit ist es vorteilhaft möglich, Applikationsprogramme modular aufzubauen, d. h. beispielsweise Programmmodule vorzusehen, die in mehreren Applikationsprogrammen zum Einsatz kommen. Dabei können die Teilprogramme abhängig von ihrem Einsatz mit unterschiedlichen Konfigurationsdaten konfiguriert werden. Teilprogramme machen es somit möglich, Applikationsprogramme einfacher erstellen zu können und damit die Rechenumgebung einfacher an einen Anwendungsfall anpassen zu können.

Gemäß einer Ausgestaltung der Erfindung ist vorgesehen, dass mehrere Applikationsprogramme zu einem Programmkomplex zusammengefasst werden, wobei für jeden Programmkomplex die den Programmkomplex beschreibenden Daten als Datenabschnitt zusammengefasst werden und die auf den betreffenden Programmkomplex bezogenen Konfigurationsdaten als Datenabschnitt zusammengefasst werden, einem als Komponente identifizierten Programmkomplex ein Komplex ID Code zugeordnet oder ein zugeordneter Komplex ID Code ausgelesen wird, bei der Erstellung der Berechnungsfunktion und der Prüffunktion zusätzlich die Komplex ID Codes von beteiligten Programmkomplexen durch einen Rechenoperator verknüpft wird.

Programmkomplexe fassen somit eine Anzahl von Applikationsprogrammen zusammen, deren gemeinsame Abarbeitung mit Blick auf die Gesamtheit von Applikationen zusammengefasst werden kann. Insbesondere kann vorgesehen werden, dass alle in dem Datensatz enthaltenen Applikationsprogramme zu einem Programmkomplex zusammengefasst werden. Dabei wird dem Umstand Rechnung getragen, dass der Datensatz hinsichtlich der zur Anwendung kommenden Daten eine Zusammenfassung von Datenabschnitten bewirkt, während parallel hierzu ein Programmkomplex die entsprechenden Applikationsprogramme, denen die Datenabschnittes zugeordnet sind, zusammenfasst.

Auch die Applikationsprogramme können Programmmodule bilden, während der Programmkomplex in diesem Fall aus einer Zusammenstellung dieser Programmmodule besteht. Mit anderen Worten können Programmmodule auf mehreren Ebenen verwendet werden.

Im Zusammenhang mit der Erstellung von Programmkomplexen, Applikationsprogrammen und Teilprogrammen soll angemerkt werden, dass jeweils den Programmkomplexen, den Applikationsprogrammen sowie den Teilprogrammen jeweils Konfigurationsdaten zugeordnet werden können. Hierbei kann es zu einer mehrfachen Abspeicherung von bestimmten Daten desselben Inhalts kommen, wobei diese jeweils Datenabschnitte ergeben, die wiederum eindeutig einem Programmkomplex, Applikationsprogrammen oder Teilprogrammen zugeordnet werden können. Wichtig ist hierbei die Möglichkeit einer eindeutigen Zuordnung, um zu Erstellung der Prüffunktion eindeutig adressierbare Datenabschnitte zur Verfügung zu haben. Da die Datenabschnitte selbst aus an sich unveränderlichen Daten bestehen, ist die Tatsache, dass Teilprogramme, Applikationsprogramme und Programmkomplexe bei Bedarf auf unterschiedliche Adressen zugreifen, um Daten desselben Inhalts abzurufen, für den Ablauf der Abarbeitung der Applikation unschädlich. Solange die Anwendung aller Prüffunktionen die erwarteten globalen ID Codes ergibt, kann davon ausgegangen werden, dass kein Fehler bei der Konfiguration der Applikationen (das heißt wegen korrupter gespeicherteer Daten, fehlerhaftem Laden, falschen Zuordnungen zur Hardware usw.) vorliegt.

Gemäß einer Ausgestaltung der Erfindung ist vorgesehen, dass als Host ID Codes und/oder Programm ID Codes und/oder Teilprogramm ID Codes und/oder System ID Codes UUIDs verwendet werden.

Ein Universally Unique Identifier (UUID) ist eine 128-BitZahl, welche zur Identifikation von Informationen in Computersystemen verwendet wird. Der Ausdruck Globally Unique Identifier (GUID) wird ebenfalls benutzt und soll im Rahmen der Erfindung in dem Begriff UUID enthalten sein. Bei der Generierung nach den Standardmethoden können UUIDs für praktische Zwecke vorteilhaft als global eindeutig angenommen werden. Obwohl die Wahrscheinlichkeit, dass ein UUID dupliziert wird, nicht null ist, ist sie so gering, dass die Wahrscheinlichkeit für eine Kollision vernachlässigbar ist. Somit lassen sich UUIDs auch für sicherheitsrelevante Anwendungen beispielsweise in der Bahntechnik nutzen, in der verschiedene einzuhaltende SIL (Safety Integrity Level) definiert werden.

Ein weiterer Vorteil von UUIDs ist die Unabhängigkeit von einer zentralen Registrierungsstelle oder Koordinierung zwischen den Parteien wie zum Beispiel dem Hostcomputer oder den Hostcomputern, den Systemen, Programmen und Teilprogrammen (im Gegensatz zu den meisten anderen Nummerierungsmethoden). Dies wird durch (pseudo)zufällig generierte UUIDs erreicht. Hierbei werden sämtliche Bits, die nicht vom UUID-Format auf feste Werte gesetzt werden, durch (pseudo-)zufällige Werte besetzt. Obwohl die Eindeutigkeit für einen so generierten UUID nicht garantiert ist, ist die Gesamtzahl der zufällig generierbaren UUIDs so groß, dass die Wahrscheinlichkeit der Erzeugung zweier gleicher UUIDs vernachlässigbar ist, sofern die verwendeten Zufallszahlenalgorithmen gleichverteilte Zufallszahlen liefern. Daher können UUIDs beliebig ohne zentrales Kontrollorgan erzeugt und zur Kennzeichnung eingesetzt werden, ohne relevante Gefahr zu laufen, dass derselbe UUID für etwas anderes verwendet wird.

Gemäß einer Ausgestaltung der Erfindung ist vorgesehen, dass als Hashfunktion ein MD5-Algorithmus verwendet wird.

Der Message-Digest Algorithm 5 (MD5-Algorithmus) ist eine weit verbreitete kryptographische Hashfunktion, die aus einer beliebigen Nachricht (im Rahmen der Erfindung durch einen Datenabschnitt gebildet) einen 128-Bit-Hashwert erzeugt. Dies erlaubt beispielsweise die leichte Überprüfung eines Datenabrufes auf Korrektheit. Sie ist ein Vertreter aus einer Reihe von kryptographischen Hashfunktionen, die 1991 von Ronald L. Rivest am Massachusetts Institute of Technology entwickelt wurde, als Analysen ergaben, dass sein Vorgänger MD4 wahrscheinlich unsicher ist. MD5 gilt inzwischen ebenfalls als nicht mehr sicher (im Sinne von Security), da es grundsätzlich möglich ist, unterschiedliche Nachrichten zu erzeugen, die den gleichen MD5-Hashwert aufweisen.

Allerdings ist die Wahrscheinlichkeit, dass zwei Nachrichten zufällig denselben Hashwert bekommen, sehr gering. Daher ist das Verfahren vorteilhaft geeignet, für jede Nachricht, d. h. jeden Datenabschnitt mit hinreichender Wahrscheinlichkeit einen anderen Hashwert zu erzeugen so dass das Verfahren für sicherheitsrelevante Anwendungen wie beispielsweise den Bahnbetrieb geeignet ist, insbesondere, wenn die Bahnanwendung zusätzlich vor einem Zugriff unberechtigter Dritter geschützt ist. Dies schließt aus, dass die Erzeugung gleicher Hashwerte missbräuchlich durchgeführt wird.

Die hohe Sicherheit gegenüber einer Erzeugung gleicher Hashwerte aus unterschiedlichen Nachrichten ist eine Eigenschaft, die allen kryptografischen Hashfunktionen gemein ist. Dies ist an sich motiviert durch die mit einer Verschlüsselung verbundenen Forderung einer hohen Sicherheit gegen feindliche Angriffe. Diese Eigenschaft steht für die erfindungsgemäße Verwendung jedoch nicht im Vordergrund. Die Rechenumgebung ist gegen feindliche Angriffe nur nach außen zu schützen. Innerhalb der Rechenumgebung ist es lediglich erforderlich, die Datenabschnitte eindeutige Hashwerte zu erzeugen, was beispielsweise durch den MD5-Algorithmus gewährleistet ist.

Gemäß einer Ausgestaltung der Erfindung ist vorgesehen, dass die den Komponenten zugeordneten ID Codes und die erzeugten Hashwerte dieselbe Bit-Länge haben, wobei die Prüffunktion für jedes Bit der ID Codes und des Hashwertes aufgestellt wird, jeweils ein Komplementärbit berechnet wird, der Komplementärcode mit derselben Bit-Länge aus der Gesamtheit der Komplementärbits berechnet und gespeichert wird.

Insbesondere kann der Komplementärcode eine Länge von 128 Bit haben, wenn als Hashfunktion der MD5-Algorithmus und als ID Codes UUIDs verwendet werden. Die bit-weise Anwendung der Prüffunktion (vorzugsweise die bit-weise Erstellung der Prüffunktion unter bit-weiser Anwendung der Berechnungsfunktion) hat den Vorteil, dass sich hierdurch ein System einfacher Prüfgleichungen als Prüffunktion verwenden lässt, mit dem kurze Rechenzeiten realisierbar sind. Die Berechnung ist somit sowohl schnell als auch ressourcenschonend durchführbar.

Gemäß einer Ausgestaltung der Erfindung ist vorgesehen, dass die ID Codes, der Hashwert und der Komplementärcode durch einen XOR-Operator miteinander verknüpft werden.

Ein XOR-Operator wird auch als "ausschließliches oder" bezeichnet. Informationstechnologisch bedeutet dies, dass als Ausgang eines XOR-Operators eine eins erzeugt wird, wenn die Eingänge des Operators unterschiedlich mit null und eins belegt sind. Der Ausgang erzeugt eine null, wenn die Eingänge des Operators gleich belegt sind, also beide mit null oder beide mit eins.

Der XOR-Operator eignet sich vorteilhaft besonders für einen bitweisen Vergleich der Hashwerte sowie ID Codes. Die Verknüpfung bewirkt, dass die verknüpften Bits eine eins ergeben, wenn diese unterschiedlich sind und eine null ergeben, wenn diese gleich sind. Das jeweils ermittelte Ergebnis wird dann mit dem nächsten verknüpften Operanden verglichen. Ein besonderer Vorteil dabei ist, dass sich aus der Berechnungsfunktion nach Berechnung des Komplementärcodes aus den Berechnungsgleichungen bitweise die Prüfgleichungen berechnen lassen, welche gemeinsam die Prüffunktion ergeben. Die Prüfgleichungen sind somit für eine bitweise Prüfung der betreffenden Datenabschnitte geeignet.

Je nach betrachteten ID Codes kann die Berechnungsfunktion beispielsweise erstellt werden zu $HID \times KID \times PID \times TID \times HASH \times GID = KC$ wobei sich die Prüffunktion beispielsweise zu $HID \times KID \times PID \times TID \times HASH \times KC = GID$ mit
- HID: Host ID Code, beispielsweise als UUID
- KID: Komplex ID Code, beispielsweise als UUID
- PID: Programm ID Code, beispielsweise als UUID
- TID: Teilprogramm ID Code, beispielsweise als UUID
- HASH: Hashwert, ermittelt beispielsweise mit dem MD5-Algorithmus
- KC: Komplementärcode, beispielsweise mit der Länge von 128 bit
- GID: globaler ID Code, beispielsweise als UUID
- x: Rechenoperator, beispielsweise XOR-Operator

wobei bei Vorliegen mehrerer Host ID Codes, Komplex ID Codes, Programm ID Codes oder Programm ID Codes auch eine mehrfache Verknüpfung der ID Codes der betreffenden Art erfolgt,
wobei sich die Grundfunktion aus der Berechnungsfunktion nach Berechnung des Komplementärcodes durch Vertauschung des Komplementärcodes mit dem globalen ID Code ergibt, sodass die Funktion dadurch angewendet werden kann, dass geprüft wird, ob sich durch Einsetzen der betreffenden ID Codes, des Hashwerts und des Komplementärcodes der globalen ID Code des betreffenden Datenabschnittes ergibt,
wobei die Berechnungsfunktion und die Prüffunktion für jedes Bit als Berechnungsgleichung und Prüfgleichung angewendet wird,
wobei sich die Berechnungsfunktion und die Prüffunktion entsprechend vereinfachen, wenn keine Komplex ID Codes und/oder Teilprogrammen ID Codes verwendet werden.

Zur Lösung der Aufgabe gehört es wie oben beschrieben erfindungsgemäß auch, dass für jedes Applikationsprogramm die das Applikationsprogramm beschreibenden Daten und die auf das betreffende Applikationsprogramm bezogenen Konfigurationsdaten jeweils als Datenabschnitt zusammengefasst sind, die Datenabschnitte der Vielzahl von Applikationsprogrammen und der Konfigurationsdaten in einem Datensatz zusammengefasst sind,
wobei ein nach dem vorstehend erläuterten Verfahren erstellter Prüfalgorithmus verwendet wird, um für einen Datenabschnitt das Ergebnis der zugehörigen Prüffunktion zu berechnen, das Ergebnis auszugeben oder mit dem globalen ID Code zu vergleichen und das Vergleichsergebnis auszugeben.

Gemäß einer Ausgestaltung der Erfindung ist vorgesehen, dass mindestens ein Applikationsprogramm eine Vielzahl von Teilprogrammen aufweist, wobei für jedes Teilprogramm die das Teilprogramm beschreibenden Daten als Datenabschnitt zusammengefasst sind und die auf das betreffende Teilprogramm bezogenen Konfigurationsdaten als Datenabschnitt zusammengefasst sind, einem als Komponente identifizierten Teilprogramm ein Teilprogramm ID Code zugeordnet oder ein zugeordneter Teilprogramm ID Code ausgelesen sind, bei der Berechnung der Prüffunktion zusätzlich die Teilprogramm ID Codes von beteiligten Teilprogrammen durch einen Rechenoperator verknüpft sind.

Gemäß einer Ausgestaltung der Erfindung ist vorgesehen, dass mehrere Applikationsprogramme zu einem Programmkomplex zusammengefasst werden, wobei für jeden Programmkomplex die den Programmkomplex beschreibenden Daten als Datenabschnitt zusammengefasst sind und die auf den betreffenden Programmkomplex bezogenen Konfigurationsdaten als Datenabschnitt zusammengefasst sind, bei der Berechnung der Prüffunktion zusätzlich die Komplex ID Codes von beteiligten Programmkomplexen durch einen Rechenoperator verknüpft sind.

Die mit der Definition und Verwendung von Teilprogrammen sowie Programmkomplexen verbundenen Vorteile sind vorstehend bereits erläutert worden und sollen an dieser Stelle nicht wiederholt werden.

Gemäß einer Ausgestaltung der Erfindung ist vorgesehen, dass von einem ersten der Applikationsprogramme und/oder Teilprogramme und/oder Programmkomplexe Daten an ein zweites der Applikationsprogramme und/oder Teilprogramme und/oder Programmkomplexe übertragen werden, wobei die Daten zusammen mit dem Ergebnis der zugehörigen Prüffunktion übertragen werden, die Daten von dem zweiten der Applikationsprogramme und/oder Teilprogramme und/oder Programmkomplexe, nur verarbeitet werden oder für Applikationen ab einem vorgegebenen Sicherheitslevel nur verarbeitet werden, wenn das mit den Daten übertragene Ergebnis der Prüffunktion des ersten der Applikationsprogramme und/oder Teilprogramme und/oder Programmkomplexe mit dem Ergebnis der Prüffunktion des zweiten der Applikationsprogramme und/oder Teilprogramme und/oder Programmkomplexe übereinstimmt.

Genau genommen gilt die Prüffunktion für den das betreffende Applikationsprogramm beschreibenden Datenabschnitt. Da mit dem Datenabschnitt jedoch auch ein Applikationsprogrammen verbunden ist, dessen Ausführung variable Daten erzeugt, die mit anderen Applikationsprogrammen ausgetauscht werden müssen, besteht Interesse an einer Prüfung durch das die Daten empfangene Applikationsprogramme ob von einer fehlerfreien Erzeugung der übertragenen Daten ausgegangen werden kann. Da das empfangene Applikationsprogrammen die auf seinen Datenabschnittes bezogene Prüffunktion anwenden kann, ist ein Vergleich des Ergebnisses mit dem Ergebnis des Applikationsprogramms (Datenabschnittes) möglich, von dem die Daten empfangen wurden. Bei einer Übereinstimmung ist die Wahrscheinlichkeit gering, dass in einem der ausführenden Applikationsprogramme (Datenabschnitte) ein Fehler aufgetreten ist. Eine Überprüfung kann somit bei der Übertragung parallel oder zumindest zeitnah danach erfolgen.

Bei einer Abweichung der Ergebnisse der oben genannten Prüffunktion kann alternativ eine weitere Verarbeitung der Daten unterbunden oder zumindest ausgesetzt werden oder nur für Applikationen unterbunden oder zumindest ausgesetzt werden, die einen vorgegebenen Sicherheitslevel erreichen oder überschreiten. Dies hat den Vorteil, dass die Rechenkapazität der betroffenen Applikationsprogramme für nicht sicherheitsrelevante Anwendungen weiter zur Verfügung stehen. Mit anderen Worten ist hiermit gemeint, dass die Applikationen durchgeführt werden können, wenn auftretende Fehler (beispielsweise ein Programmabsturz) keine sicherheitsrelevanten Risiken bergen (sicherheitsrelevante Risiken sind bei Bahnapplikationen beispielsweise Zugkollisionen oder andere Unfälle).

Gemäß einer Ausgestaltung der Erfindung ist vorgesehen, dass das erste und das zweite der Applikationsprogramme und/oder Teilprogramme und/oder Programmkomplexe gestoppt oder der für diese Applikationsprogramme und/oder Teilprogramme und/oder Programmkomplexe identifizierte Hostrechner heruntergefahren wird, wenn das mit den Daten übertragene Ergebnis der Prüffunktion des ersten der Applikationsprogramme und/oder Teilprogramme und/oder Programmkomplexe mit dem Ergebnis der Prüffunktion, des zweiten der Applikationsprogramme und/oder Teilprogramme und/oder Programmkomplexe nicht übereinstimmt.

Durch das Stoppen des Programmablaufes bzw. das Herunterfahren des identifizierten Hostrechners wird vorteilhaft wirksam verhindert, dass die fehlerhafte Bearbeitung der Applikation weiter fortgeführt wird. Im Anschluss daran kann das betreffende Applikationsprogramm (inkl. Teilprogrammen, Programmkomplexen) auch wieder gestartet bzw. der betroffene Hostrechner wieder hochgefahren werden. Insbesondere, wenn die Applikationsprogramme redundant ausgeführt werden, um ein anschließendes Voten der erzeugten variablen Daten durchführen zu können, kann der Betrieb beispielsweise einer Bahnanwendung weiterlaufen, während einzelne Applikationsprogramme bzw. Hostrechner neu gestartet werden. Diese werden wieder in den Redundanten Betrieb eingegliedert, sobald deren Betrieb möglich ist. Anhand der dann erzeugten Ergebnisse kann unter Anwendung der Prüffunktion sofort überprüft werden, ob die Maßnahme den aufgetretenen Fehler eliminiert hat. Wenn dies nicht der Fall ist, müssen weiterführende Maßnahmen eingeleitet werden. Beispielsweise kann ein Servicetechniker für Wartungsmaßnahmen angefordert werden.

Gemäß einer Ausgestaltung der Erfindung ist vorgesehen, dass vor dem Starten eines Bearbeitungsprozesses, der eine Interaktion zwischen einer Vielzahl von Applikationsprogrammen und/oder Teilprogrammen und/oder Programmkomplexen beinhaltet, die Ergebnisse der Prüffunktionen dieser Vielzahl von Applikationsprogrammen und/oder Teilprogrammen und/oder Programmkomplexen miteinander verglichen werden und eine Übertragung von Daten zwischen Applikationsprogrammen und/oder Teilprogrammen und/oder Programmkomplexen nur zugelassen wird oder ab einem vorgegebenen Sicherheitslevel nur zugelassen wird, wenn alle Ergebnisse der Prüffunktion übereinstimmen oder eine Übertragung von Daten nur zwischen Applikationsprogrammen und/oder Teilprogrammen und/oder Programmkomplexen zugelassen wird, deren Ergebnis der Prüfunktion der Mehrheit der Ergebnisse der Prüffunktion entspricht.

Der Verarbeitungsprozess selbst wird vorzugsweise ebenfalls durch ein hierfür zuständiges Applikationsprogramm gesteuert. Dieses Applikationsprogramm enthält somit Anweisungen für die Interaktion der Vielzahl von Applikationsprogramm, die an dem Verarbeitungsprozess beteiligt sind. Hierbei findet eine Datenübertragung zwischen den beteiligten Applikationsprogrammen statt, wie bereits vorstehend beschrieben. Das für die Steuerung des Verarbeitungsprozess zuständige Applikationsprogramm kann ebenfalls Routinen enthalten, welche eine Prüfung der Übereinstimmung der Ergebnisse der Prüffunktionen der betroffenen Applikationsprogramme durchführen.

Vorteilhaft kann eine Prüfung der Applikationsprogramme mittels der Prüffunktion also bereits erfolgen, bevor die Applikationsprogramme variable Daten (im Sinne von Nutzdaten, die für den Bearbeitungsprozess erforderlich sind) erzeugen und austauschen. Hierdurch kann ein Bearbeitungsprozess, der potenziell fehlerbehaftete Daten erzeugen wird, von vornherein unterbunden werden. Die Bearbeitung der Dienstprogramme, die die Anwendung der Prüffunktion ermöglichen und der damit verbundene Datenaustausch finden natürliche statt, sind allerdings für den eigentlichen Bearbeitungsprozess einer Applikation zum Beispiel zur Steuerung eines Bahnbetrieb nicht relevant. Sie laufen auch nach Aufnehmen des Bearbeitungsprozesses im Hintergrund ab.

Gemäß einer Ausgestaltung der Erfindung ist vorgesehen, dass, wenn nicht alle Ergebnisse der Prüffunktion übereinstimmen, das mindestens eine Applikationsprogramm und/oder Teilprogramm und/oder der mindestens eine Programmkomplex, dessen Ergebnis der Prüffunktion von der Mehrheit der Ergebnisse der Prüffunktion abweicht, oder der für dieses mindestens eine Applikationsprogramm und/oder Teilprogramm und/oder mindestens einen Programmkomplex identifizierte Hostrechner an der Ausführung dieses mindestens einen Applikationsprogramm und/oder mindestens einen Teilprogramm und/oder mindestens einen Programmkomplex (PK1 ... PK4) gehindert wird.

Gemäß einer Ausgestaltung der Erfindung ist vorgesehen, dass die den Komponenten zugeordneten ID Codes und die erzeugten Hashwerte dieselbe Bit-Länge haben, wobei die Prüffunktion für jedes Bit der ID Codes und des Hashwertes und des Komplementärcodes aufgestellt wird, jeweils ein Ergebnisbit berechnet wird, das Ergebnis Prüffunktion mit derselben Bit-Länge aus der Gesamtheit der Ergebnisbits berechnet und gespeichert wird.

Die genannte Aufgabe wird alternativ mit dem eingangs angegebenen Anspruchsgegenstand (sicherheitsrelevante Rechenumgebung) erfindungsgemäß auch dadurch gelöst, dass der Hostrechner oder alle Hostrechner dazu eingerichtet sind, ein Verfahren gemäß einem der voranstehenden Ansprüche durchzuführen.

Der Einsatz der vorstehend genannten erfindungsgemäßen Verfahren in einer sicherheitsrelevanten Rechenumgebung, die insbesondere für eine Bahn Anwendung vorgesehen ist, erzeugt die bereits im Rahmen mit den erfindungsgemäßen Verfahren erläuterten Vorteile. Das zum erfindungsgemäßen Verfahren Aufgeführte gilt entsprechend auch für die erfindungsgemäße Rechenumgebung.

Des Weiteren wird ein Computerprogrammprodukt mit Programmbefehlen zur Durchführung des genannten erfindungsgemäßen Verfahrens und/oder dessen Ausführungsbeispielen beansprucht, wobei mittels des Computerprogrammprodukts jeweils das erfindungsgemäße Verfahren und/oder dessen Ausführungsbeispiele durchführbar sind.

Darüber hinaus kann eine Bereitstellungsvorrichtung zum Speichern und/oder Bereitstellen des Computerprogrammprodukts zum Einsatz kommen. Die Bereitstellungsvorrichtung ist beispielsweise ein Speichereinheit, die das Computerprogrammprodukt speichert und/oder bereitstellt.

Alternativ und/oder zusätzlich ist die Bereitstellungsvorrichtung beispielsweise ein Netzwerkdienst, ein Computersystem, ein Serversystem, insbesondere ein verteiltes, beispielsweise cloudbasiertes Computersystem und/oder virtuelles Rechnersystem, welches das Computerprogrammprodukt vorzugsweise in Form eines Datenstroms speichert und/oder bereitstellt.

Die Bereitstellung erfolgt in Form eines Programmdatenblocks als Datei, insbesondere als Downloaddatei, oder als Datenstrom, insbesondere als Downloaddatenstrom, des Computerprogrammprodukts. Diese Bereitstellung kann beispielsweise aber auch als partieller Download erfolgen, der aus mehreren Teilen besteht. Ein solches Computerprogrammprodukt wird beispielsweise unter Verwendung der Bereitstellungsvorrichtung in ein System eingelesen, sodass das erfindungsgemäße Verfahren auf einem Computer zur Ausführung gebracht wird.

Weitere Einzelheiten der Erfindung werden nachfolgend anhand der Zeichnung beschrieben. Gleiche oder sich entsprechende Zeichnungselemente sind jeweils mit den gleichen Bezugszeichen versehen und werden nur insoweit mehrfach erläutert, wie sich Unterschiede zwischen den einzelnen Figuren ergeben.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Komponenten auch durch mit den vorstehend beschriebenen Merkmalen der Erfindung kombinierbar.

Es zeigen:
Figur 1 eine Bahnanwendung mit einem Ausführungsbeispiel der erfindungsbemäßen Rechenumgebung mit ihren Wirkzusammenhängen schematisch,
Figur 2 ein Ausführungsbeispiel einer Rechenumgebung in der Bahnanwendung gemäß Figur 1 mit zwei Hostrechnern als Blockschaltbild, wobei die einzelnen Funktionseinheiten Programmmodule enthalten, die jeweils in einem oder mehreren Prozessoren ablaufen können und die Schnittstellen demgemäß softwaretechnisch oder hardwaretechnisch ausgeführt sein können,
Figur 3 ein Ausführungsbeispiel des erfindungsgemäßen Verfahrens als Flussdiagramm, wobei die einzelnen Verfahrensschritte einzeln oder in Gruppen durch Programmmodule verwirklicht sein können und wobei die Funktionseinheiten und Schnittstellen gemäß Figur 2 beispielhaft angedeutet sind.

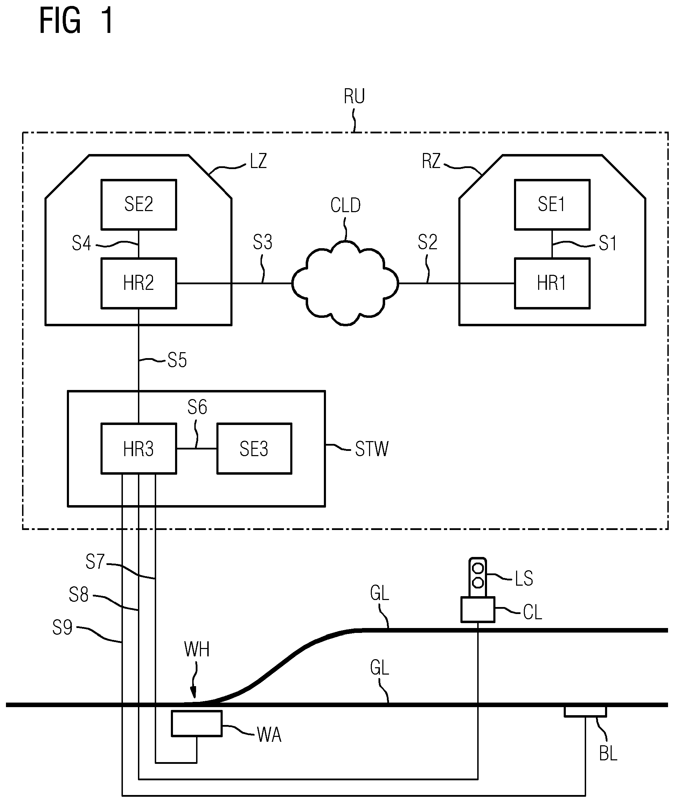

In Figur 1 ist schematisch eine Bahnanwendung dargestellt, welche durch eine Rechnerumgebung RU gesteuert wird. Die Bahnanwendung weist Gleise GL auf, an denen verschiedene Komponenten der Stellwerkstechnik exemplarisch dargestellt sind. Hierbei handelt es sich um einen Weichenantrieb WA, der eine Weiche WH stellen kann. Weiterhin ist eine Balise BL in einem der Gleise verbaut, mit deren Hilfe Informationen mit die Balise überfahrenden Zügen ausgetauscht werden können. Zuletzt ist ein Lichtsignal LS dargestellt, welches durch einen Controller CL gesteuert wird.

Die Rechnerumgebung RU kann verschiedene Hostrechner HR1, HR2, HR3 aufweisen, auf die Applikationen zum Steuern der Bahnanwendung in Form von Applikationsprogrammen (hierzu im Folgenden noch mehr) verteilt sind. Der erste Hostrechner HR1 wird durch ein Rechenzentrum RZ zur Verfügung gestellt und ist über eine erste Schnittstelle S1 mit einer ersten Speichereinrichtung SE1 verbunden. Das Rechenzentrum RZ kann beispielsweise durch einen Dienstleister des Bahnbetreibers oder durch den Bahnbetreiber selbst betrieben werden. Über eine zweite Schnittstelle S2 ist der erste Hostrechner HR1 mit einer Cloud CLD verbunden, sodass dieser örtlich nicht an die Bahnanwendung gebunden ist.

Eine Leitzentrale LZ des Bahnbetreibers beherbergt den zweiten Hostrechner HR2, der über eine dritte Schnittstelle S3 ebenfalls mit der Cloud CLD verbunden ist. Außerdem ist der zweite Hostrechner HR2 über eine vierte Schnittstelle S4 mit einer zweiten Speichereinrichtung SE2 verbunden.

Die Rechnerumgebung RU weist außerdem exemplarisch ein Stellwerk STW auf, welches den dritten Hostrechner HR3 beherbergt, der über eine sechste Schnittstelle S6 mit einer dritten Speichereinrichtung SE3 verbunden ist. Außerdem weist der dritte Hostrechner HR3 eine fünfte Schnittstelle S5 zum zweiten Hostrechner HR2 auf. In nicht dargestellter Weise könnte der Hostrechner HR3 auch mit der Cloud CLD verbunden sein. Der dritte Hostrechner HR3 weist außerdem eine siebte Schnittstelle S7 zum Weichenantrieb WA, eine achte Schnittstelle S8 zu dem Controller CL und eine neunte Schnittstelle S9 zu der Balise BL auf.

Alle Schnittstellen S1 ... S9 gemäß Figur 1 sind grundsätzlich kabelgebunden oder auch durch eine kabellose Übertragungstechnik, beispielsweise Funk, realisierbar. Die Anordnung der Hostrechner HR1 ... HR3 ist lediglich exemplarisch und kann bei komplexeren Bahnanlagen beliebig erweitert werden. Eine Rechenumgebung wird dadurch definiert, dass die Beteiligten Hostrechner HR1 ... HR3 untereinander kommunizieren können und dadurch die Applikationen unter Berücksichtigung verfügbarer Rechenkapazitäten verteilt auf den Hostrechner HR1 ... HR3 abgearbeitet werden können.

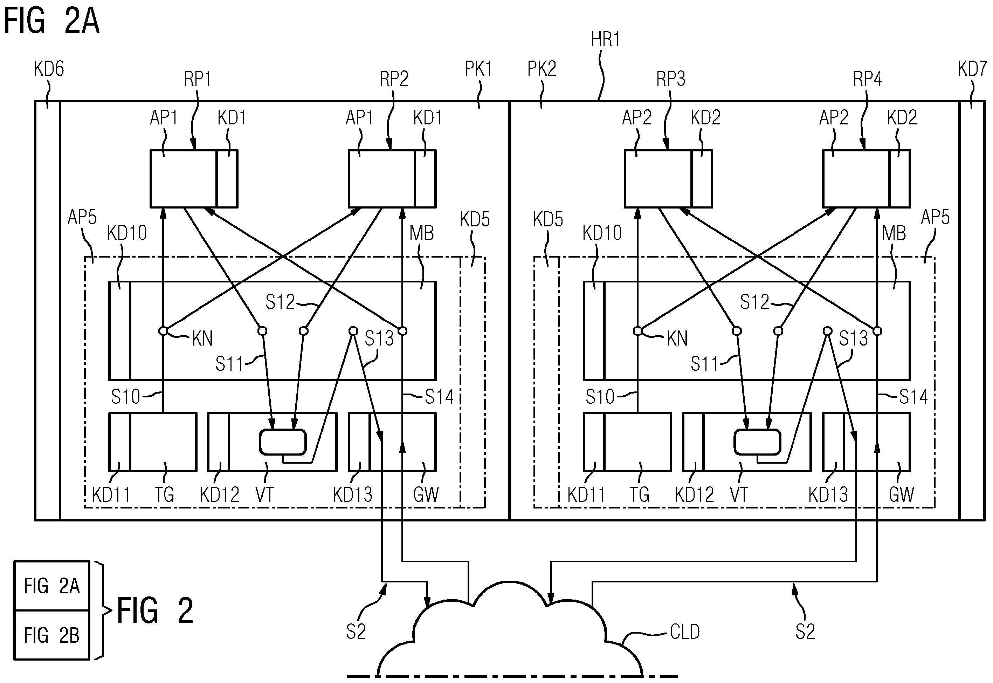

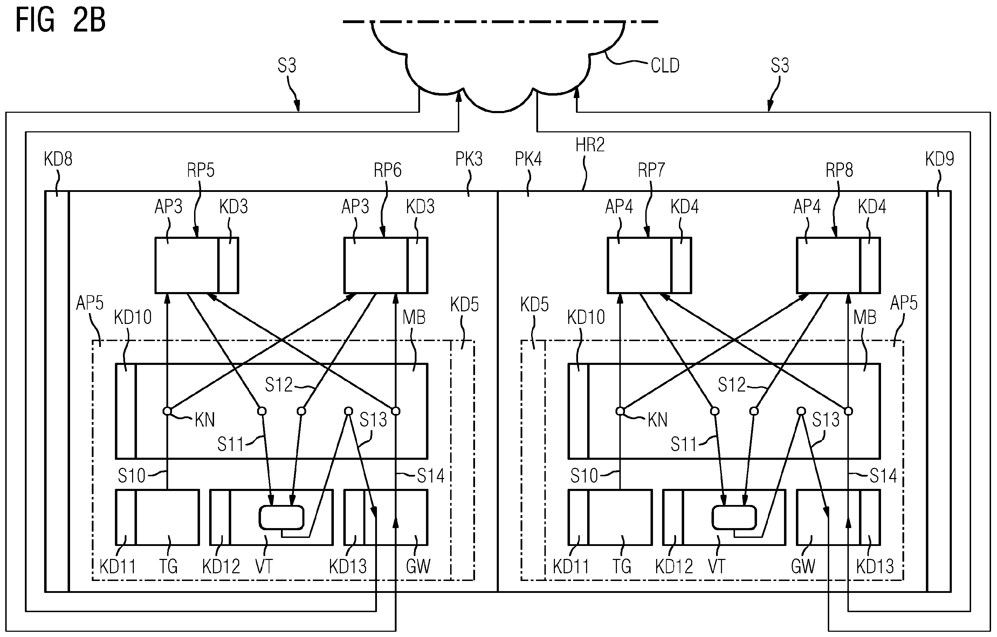

Figur 2 stellt die Konfiguration des ersten Hostrechners HR1 und des zweiten Hostrechners HR2 gemäß Figur 1 exemplarisch dar. Die Einbindung weiterer Hostrechner kann analog erfolgen. Die Hostrechner sind so organisiert, dass zur Bewältigung bestimmte Aufgabenkomplexe in Form von Programmkomplexen PK1, PK2, PK3, PK4 auf den Hostrechnern organisiert werden, welche aus einzelnen Applikationsprogrammen AP1 ... AP5 bestehen. Anhand des fünften Applikationsprogramms AP5 ist außerdem gezeigt, dass dieses durch einzelne Teilprogramme realisiert werden kann. Die Teilprogramme des fünften Applikationsprogramms AP5 sind ein Gateway GW, ein Voter VT, ein Taktgeber TG und ein Message Broker MB (hierzu im Folgenden noch mehr). Dies ist aber nur als Beispiel zu verstehen. Alternativ könnte der Taktgeber in einer anderen (nicht sicheren) Applikation laufen, währen die restlichen Teilprogramme wie beschrieben in der einen (sicheren) Applikation laufen.

Das fünfte Applikationsprogramm AP5 ist in allen Programmkomplexen PK1 ... PK4 gleich organisiert. Über den Gateway GW können Nachrichten mit der Cloud CLD ausgetauscht werden. Daher bildet der Gateway GW die Schnittstellen S2 und S3 gemäß Figur 1 aus. Über den Message Broker MB werden die Nachrichten innerhalb des Programmkomplexes PK1 ... PK4 verteilt, vorzugsweise nach dem Publish-Subscribe-Verfahren. Der Gateway GW nutzt beispielsweise eine Schnittstelle S14, empfangene Nachrichten Replikanten RP1 ... RP8 über den Message Broker MB zur Verfügung zu stellen. Diese werden dann durch die Replikanten RP1 ... RP8 abgerufen. Dies ist durch Knoten KN angedeutet, welche in der Schnittstelle S14 (und ebenfalls in den weiteren, im Folgenden noch beschriebenen Schnittstellen S10 ... S13) angedeutet sind.

In Figur 2 sind der Übersichtlichkeit halber die Programmkomplexe PK1 ... PK4 jeweils vollständig in einem Hostrechner HR1 ... HR2 realisiert. In der Realität können Programmkomplexe mit ihren Applikationsprogrammen und Teilprogramme auch auf mehrere Hostrechner verteilt ablaufen (nicht dargestellt). Dies ermöglicht es vorteilhaft, Kapazitäten von Hostrechnern zu nutzen, wenn diese für die Konfiguration eines ganzen Programmkomplexes nicht ausreichend Kapazität zur Verfügung stellen, indem die Kapazität von mehreren Hostrechnern für den betreffenden Programmkomplexe gemeinsam genutzt wird.

Die Programmkomplexe können beispielsweise für einen bestimmten Aufgabenkomplex vorgesehen werden. Beispielsweise kann ein Programmkomplex zur Ansteuerung einer bestimmten Bahnkomponente (Signal, Stellwerk, Weiche, Achszähler usw.) Verwendung finden. Für die Ansteuerung dieser Bahnkomponente sind im Allgemeinen mehrere Applikationsprogramme erforderlich. Insbesondere wird auch das bereits vorstehend erläuterte Applikationsprogramme AP5 benötigt, um eine sichere Ausführung der Applikation sowie Kommunikation mit anderen Hostrechnern zu gewährleisten.

Als Replikanten im Sinne der Erfindung wird eine Softwareimplementierung auf den Hostrechnern HR1 ... HR3 verstanden, die eine parallele Abarbeitung von Applikationsprogrammen AP1 ... AP4, vorzugsweise innerhalb des Programmkomplexes PK1 ... PK4 erlauben. In Figur 2 dargestellt, sind Programmkomplexe mit je zwei Replikanten, vorzugsweise werden jedoch drei Replikanten verwendet, es sind aber auch mehr Replikanten denkbar. Im Folgenden wird das Verfahren zur Abarbeitung der Applikationsprogramme anhand des ersten Programmkomplexes PK1 für den ersten Replikanten RP1 und den zweiten Replikanten RP2 zur Abarbeitung des ersten Applikationsprogramms AP1 erläutert. Für die Programmkomplexe PK2 ... PK4 läuft die Abarbeitung aber entsprechend ab, sodass diese nicht gesondert erläutert werden muss.

Im ersten Replikanten RP1 und zweiten Replikanten RP2 wird das erste Applikationsprogramm AP1 parallel abgearbeitet. Hierbei handelt es sich um ein Applikationsprogramm, welches eine Aufgabe für die Bahnanwendung gemäß Figur 1 übernimmt. Im ersten Replikanten RP1 und im zweiten Replikanten RP2 stehen überdies erste Konfigurationsdaten KD1 zur Verfügung, welche zur Ausführung des ersten Applikationsprogramms AP1 zur Abarbeitung der individuellen Aufgabe der Bahnanwendung erforderlich sind. Beispielsweise kann das erste Applikationsprogramm AP1 allgemein zur Ansteuerung von Lichtsignalen dienen, wobei die ersten Konfigurationsdaten KD1 die Anwendung des ersten Applikationsprogramms AP1 auf das Lichtsignal LS gemäß Figur 1 gewährleisten. Hierbei muss beispielsweise eine Kommunikation mit dem Controller CL gemäß Figur 1 sichergestellt werden.

Konfigurationsdaten KD1 ... KD13 stehen auch für alle anderen Programmkomplexe PK1 ... PK4, Applikationsprogramme AP1 ... AP4 sowie Teilprogramme MB, TG, VT, GW zur Verfügung. Entsprechend enthalten die Konfigurationsdaten KD1 ... KD13 die jeweils für die Programmkomplexe, Applikationsprogramme und Teilprogramme erforderlichen Daten, damit diese die ihnen zugewiesenen Aufgaben im betreffenden Anwendungsfall übernehmen können. Dabei sind die Konfigurationsdaten jeweils unveränderlich und können daher in einem Datenabschnitt mit bekanntem Anfang und bekanntem Ende abgespeichert werden. Ebenso werden alle Programmkomplexe PK1 ... PK4, Applikationsprogramme AP1 ... AP4 sowie Teilprogramme TG, VT, GW, MB als Datenabschnitte mit bekanntem Anfang und bekanntem Ende abgespeichert. Hierfür stehen beispielsweise die erste Speichereinrichtung SE1, die zweite Speichereinrichtung SE2 sowie die dritte Speichereinrichtung SE3 gemäß Figur 1 zur Verfügung.

Daten, die sich während der Abarbeitung von Programmen verändern, werden zwischen den beteiligten Partnern als Nachrichten ausgetauscht. Hierfür steht, wie bereits erwähnt, der Message Broker MB zur Verfügung. Außerdem kommunizieren die einzelnen Hostrechner HR1, HR2 über die externen Schnittstellen S2, S3 beispielsweise mittels einer Cloud CLD untereinander, damit Daten auch zwischen verschiedenen Programmkomplexen PK1 ... PK4 verschiedener Hostrechner ausgetauscht werden können.

Die Abläufe in der Bahnanwendung gemäß Figur 1 sind sicherheitsrelevant für die Betriebssicherheit der Bahnanwendung. Dies ist der Grund, warum das erste Applikationsprogramm AP1 in dem ersten Replikanten RP1 und dem zweiten Replikanten RP2 parallel, d. h. redundant, abgearbeitet wird. Der erste Replikant RP1 und der zweite Replikant RP2 senden das Ergebnis bei der Abarbeitung der Applikation an den Message Broker MB, und zwar der erste Replikant RP1 über die elfte Schnittstelle S11 und der zweite Replikant über die Schnittstelle S12. Diese Ergebnisse werden über die genannten Schnittstellen von dem Voter VT abgerufen, der ein Voting durchführt. Nur, wenn die Mehrheit der Ergebnisse übereinstimmt (d.h. bei zwei Replikanten beide Ergebnisse, bei drei Replikanten mindestens zwei Ergebnisse, bei vier Replikanten mindestens drei Ergebnisse usw.), wird das Ergebnis über die dreizehnte Schnittstelle S13 dem Message Broker zur Verfügung gestellt und kann von dem Gateway GW über die dreizehnte Schnittstell S13 zur Übertragung an andere Einheiten über die zweite Schnittstelle S2 abgerufen werden.

Damit die Berechnungsergebnisse für das Voting durch den Voter VT gleichzeitig zur Verfügung stehen, werden die Prozesse im ersten Replikanten RP1 und im zweiten Replikanten RP2 über den Taktgeber TG getaktet. Dieser stellt Taktsignale über die zehnte Schnittstelle S10 zur Verfügung, die ebenfalls über den Message Broker MB von dem ersten Replikanten RP1 und dem zweiten Replikanten RP2 abgerufen werden können.

Die geschilderte Art der Abarbeitung von Aufgaben durch das erste Applikationsprogramm AP1 und das zweite Applikationsprogramm AP2 wird durch das fünfte Applikationsprogramm AP5 sichergestellt. Bei dem fünften Applikationsprogramm AP5 handelt es sich also um ein internes Applikationsprogramm, welches die Funktionsweise der Hostrechner HR1 ... HR3 unterstützt. Dies macht deutlich, dass Applikationsprogramme nicht nur für die Applikation der Bahnanwendung gemäß Figur 1 (Nutzprogramme), sondern auch für die Abarbeitung von Applikationen in den Hostrechnern HR1 ... HR3 (Dienstprogramme) zur Verfügung gestellt werden müssen.

Die Zusammenfassung von Applikationsprogrammen zu Programmkomplexen sowie die Unterteilung von Applikationsprogrammen in Teilprogramme erleichtert hierbei die Zusammenstellung von Applikationsprogrammen sowie die Prüfung der Abarbeitung der Aufgaben auf Fehlerfreiheit. Zu diesem Zweck werden Daten zu Datenabschnitten zusammengefasst, die jeweils als solche eindeutig identifiziert und adressiert werden können (durch Definition eines Anfangs des Datenabschnitts sowie eines Endes des Datenabschnitts). Als Datenabschnitte werden, wie bereits erwähnt, Teilprogramme, Applikationsprogramme, Programmekomplexe sowie die jeweilig zugehörigen Konfigurationsdaten definiert. Hierbei werden die erforderlichen Daten nötigenfalls vorzugsweise mehrfach abgespeichert, sodass die Datenabschnitte und Konfigurationsdateien jeweils eindeutig einer Funktionsgleichung (Berechnungsfunktion) zugeordnet werden können. Mit anderen Worten kommt es in diesem Fall nicht vor, dass unterschiedliche Applikationsprogramme, wenn diese identische Konfigurationsdaten verwenden, auf denselben Speicherort für diese Daten zugreifen, sondern immer auf den jeweils ihnen zugeordneten Datenabschnitt, in dem die Daten verfügbar sind.

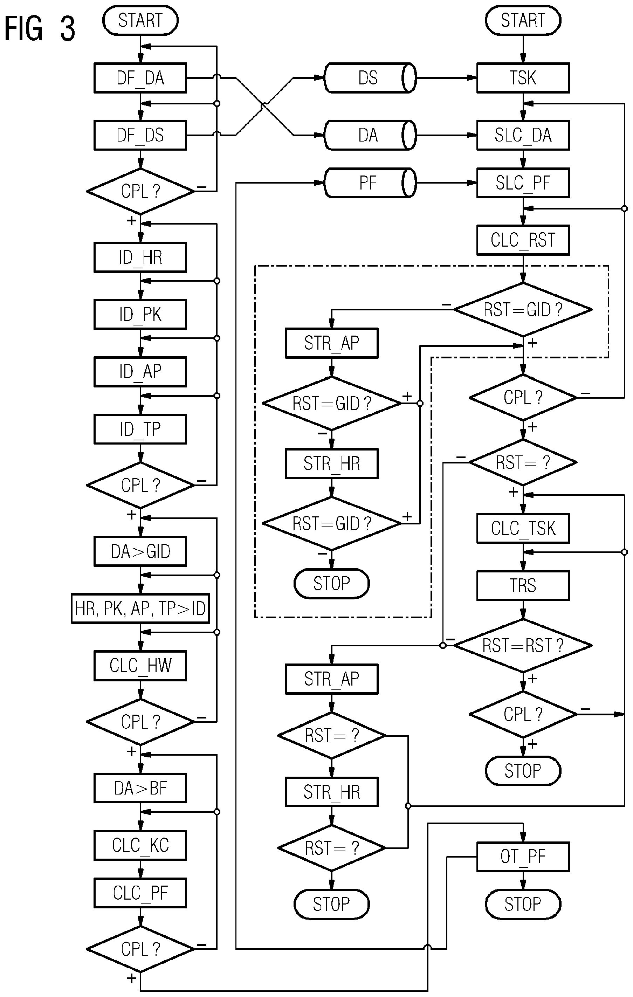

In Figur 3 ist das Verfahren zum Erstellen eines rechnergestützten Prüfalgorithmus und dessen anschließende Verwendung in einem Verfahren zum rechnergestützten Bearbeiten mit Prüfen der verwendeten Datenabschnitte durch die Prüffunktion stark vereinfacht dargestellt. Die Vereinfachung besteht insbesondere in der Zusammenfassung von Rekursionsschleifen, was der Übersichtlichkeit dienen soll.

Das Verfahren zum Erstellen der Prüffunktion startet in einer Routine mit einem Bestimmungsschritt für Datenabschnitte DF_DA sowie einem Bestimmungsschritt von Datensätzen DF_DS, die aus einem konsistenten Satz von Datenabschnitten bestehen in dem Sinne, dass die Abarbeitung der Datenabschnitte eines Datensatzes der Bewältigung einer Aufgabe TSK dienen. Die Bestimmungsschritte für Datenabschnitte DF_DA sowie Bestimmungsschritte für Datensätze DF_DS werden so lange wiederholt, bis alle Datenabschnitte für die intendierten Aufgaben TSK bestimmt und in geeigneter Weise zu Datensätzen zusammengefasst und die Datenabschnitte DA und Datensätze DS abgespeichert wurden. Hierfür erfolgt ein Abfrageschritt CPL?, ob die genannten Schritte vollständig durchgeführt wurden. Die Bestimmung von Datenabschnitten DA sowie Datensätzen DS erfolgt derart, dass die Datenabschnitte durch einen bekannten Anfang des Datenabschnitts sowie ein bekanntes Ende des Datenabschnitts eindeutig identifizierbar sind. Die Zusammenstellung verschiedener Datenabschnitte DA zu einem Datensatz DS ist dementsprechend eindeutig identifizierbar. Dies bedeutet, dass die Datenabschnitte und Datensätze genau definiert und damit adressierbar sind und sich auf die Datenabschnitte insbesondere eine Hash-Funktion zur Erzeugung eines Hashwerts anwenden lässt (hierzu im Folgenden mehr).

Durch die Bestimmung der Datenabschnitte DA sind alle unveränderlichen Daten, die zur Abarbeitung einer Aufgabe TSK erforderlich sind, eindeutig erfasst. Hierbei handelt es sich um die Teilprogramme, Applikationsprogramme und Programmkomplexe beschreibenden Daten (es handelt sich hierbei um den durch Hostrechner ausführbaren Programmcode) und die Konfigurationsdaten, die das betreffende Programm für den betreffenden Anwendungsfall in der Rechenumgebung RU konfigurieren.

In einer weiteren Routine werden nun die an der Abarbeitung von Aufgaben beteiligten Hardwarekomponenten und Softwarekomponenten identifiziert. Dabei sind die Datensätze derart organisiert, dass diese alle Datenabschnitte für die Bewältigung der geplanten Aufgabe TSK enthalten und somit die Grenzen für die Identifizierung in dieser Routine bilden. Im Einzelnen wird ein Identifizierungsschritt für Programmkomplexe ID_PK, ein Identifizierungsschritt für Applikationsprogramme ID_AP und ein Identifizierungsschritt für Teilprogramme ID_TP durchgeführt. Diese Schritte werden so oft wiederholt, bis alle Hardwarekomponenten und Softwarekomponenten identifiziert worden sind. Dies wird durch einen Abfrageschritt CPL? geprüft, ob alle Schritte durchgeführt wurden. Die Identifikation von Hardwarekomponenten und Softwarekomponenten erfolgt insbesondere durch Auswertung der Datenabschnitte mit den Konfigurationsdaten, da diese auch Adressen für die zu verwendenden Hardwarekomponenten und Softwarekomponenten enthalten.

Es folgt eine Routine, in der die Prozessparameter für eine Prozessfunktion PF bestimmt werden. Diese besteht aus Zuordnungsschritten für einen globalen ID Code DA>GID, bei dem den jeweiligen Datenabschnitten DA als globaler ID Code vorzugsweise eine UUID zugeordnet wird. Weiterhin bekommen alle identifizierten Hardwarekomponenten und Softwarekomponenten jeweils einen ID Code, vorzugsweise ebenfalls eine UUID zugeordnet. Hostrechner HR bekommen einen Host ID Code, Programmkomplexe PK einen Komplex ID Code, Applikationsprogramme AP einen Programm ID Code und Teilprogramme TP einen Teilprogramm ID Code zugeordnet. In einem Berechnungsschritt für einen Hashwert CLC_HW wird außerdem jedem Datenabschnitt DA durch Anwendung einer Hashfunktion, bevorzugt dem MD5-Algorithmus, ein Hashwert zugeordnet. Die genannten Schritte werden wiederholt, bis ein Abfrageschritt CPL? ergibt, dass die Schritte für alle Datenabschnitte, Hardwarekomponenten und Softwarekomponenten durchgeführt wurden.

In einer nachfolgenden Routine werden nun Berechnungsfunktionen BF für alle Daten erstellt und berechnet. In einem Erstellungsschritt für die Berechnungsfunktion DA>BF werden die für den jeweiligen Datenabschnitt relevanten Hardwarekomponenten und Softwarekomponenten mit ihren entsprechenden ID Codes dahingehend berücksichtigt, dass diese durch einen Operator miteinander verknüpft werden, insbesondere einem XOR-Operator. Außerdem wird der globale ID Code des betreffenden Datenabschnitts DA verknüpft.

In einem nachfolgenden Berechnungsschritt für einen Komplementärcode CL_KC wird ein Komplementärcode als Ergebnis der Berechnungsfunktion berechnet. Vorzugsweise erfolgt dies durch je eine Gleichung für jedes Bit der ID Codes sowie des Hashwerts, die in diesem Fall alle dieselbe Bitlänge aufweisen. Sobald der Komplementärcode KC berechnet wurde, lässt sich mit dessen Hilfe in einem Berechnungsschritt für die Prüffunktion CLC_PF eine zugehörigen Prüffunktion (ebenfalls vorzugsweise bitweise für jedes Bit durch eine Gleichung, s. o.) erstellen, bei der die bereits ermittelten ID Codes sowie der Hashwert des betreffenden Datenabschnittes mit dem Komplementärcode verknüpft werden, wobei das Ergebnis dieser Prüffunktion der globale ID Code des betreffenden Datenabschnittes ist.

Durch eine Abfrage CLP? wird geprüft, ob alle Prozessfunktionen erstellt wurden. Anschließend werden die Prozessfunktionen durch einen Ausgabeschritt OT_PF ausgegeben und abgespeichert, bevor das Verfahren endet.

Das Verfahren zum rechnergestützten Bearbeiten von Applikationen startet mit der Auswahl einer Aufgabe TSK, wobei für diese Aufgabe ein geeigneter gespeicherter Datensatz DS verwendet wird. Im Einzelnen werden die für die Aufgabe erforderlichen Datenabschnitte dieses Datensatzes geladen (dies können, müssen aber nicht alle Datenabschnitte dieses Datensatzes sein, jedoch gehören alle geladenen Datenabschnitte dem ausgewählten Datensatz an), wobei diese in einem Auswahlschritt für Datenabschnitte SLC_DA geeignet ausgewählt werden. In einem weiteren Auswahlschritt für die Prozessfunktion SLC_PF werden die für den geladenen Datenabschnitte DA berechneten (Hashwerte, ID Codes, Komplementärcode, gegebenenfalls globaler ID Code) Prüffunktionen PF heruntergeladen. Für diese Prüffunktionen wird in einem Berechnungsschritt CLC_RST unter Hinzuziehung der Parameter das Ergebnis berechnet und optional eine Abfrage gestartet, ob das Ergebnis RST dem globalen ID Code GID entspricht. Ist dies der Fall, wird die Routine zur Berechnung der Ergebnisse aller Prüffunktionen PF wiederholt, bis eine Abfrage CLP? ergibt, dass alle Prüffunktionen berechnet wurden.

Der genannte optionale Abfrageschritt RST=GID setzt voraus, dass der globale ID Code GID dem Verfahren zur Verfügung steht. Dieser muss dann in der Rechenumgebung in geeigneter Weise abgespeichert sein. Vorteilhaft ist dabei eine Beschränkung des Zugriffs auf den globalen ID Code, damit dieser nicht durch einen Fehler in dem Verfahren außerhalb des hier beschriebenen optionalen Schritts zum Einsatz kommen kann. Nur so ist sichergestellt, dass das Verfahren nur mit den Ergebnissen RST aus der Anwendung der Prüffunktion PF arbeitet und deren Richtigkeit ohne den tatsächlich vorliegenden globalen ID Codes mit den Ergebnissen RST anderer Berechnungen verglichen wird (hierzu im Folgenden noch mehr).

Sollte die Abfrage RST=GID ergeben, dass das betreffende berechnete Ergebnis RST nicht dem globalen ID Code entspricht, so kann in einem nächsten Schritt zur berechneten Prüffunktion PF gehörende Applikationsprogramm AP gestoppt und bevorzugt durch einen Neustart STR_AP wieder gestartet werden. Anschließend wird die Abfrage RST=GID erneut gestellt. Ist das Ergebnis nun richtig, wird die nächste Prüffunktion berechnet. Ist das Ergebnis falsch, so erfolgt das Herunterfahren des Hostrechners und ein Neustart des Hostrechners HR in einem Schritt STR_HR. Es erfolgt eine neue Abfrage RST=GID. Ist das Ergebnis nun richtig, wird die nächste Prozessfunktion berechnet, ist das Ergebnis weiter falsch, wird das Verfahren zumindest für den betroffenen Hostrechner gestoppt. In der Folge werden weiterführende Wartungsmaßnahmen, beispielsweise durch einen Servicetechniker, erforderlich und durchgeführt (nicht dargestellt).

Ergibt die oben bereits erwähnte Abfrage CPL?, dass alle Prozessfunktionen berechnet wurden, erfolgt ein Abfrageschritt RST=, in dem abgefragt wird, ob alle berechneten Ergebnisse RST denselben Wert aufweisen. Ist dies der Fall, kann in einem Berechnungsschritt CLC_TSK mit der Abarbeitung der Aufgabe TSK begonnen werden. Hierbei sind einzelne Rechenoperationen notwendig, die unter anderem auch Übertragungsschritte TRS für Daten zwischen einzelnen Hostrechnern, Programmkomplexen, Applikationsprogrammen oder Teilprogrammen erfordern. Erfolgt zwischen diesen genannten Komponenten eine Übertragung von Daten, so werden diese zusammen mit dem Ergebnis RST der zugehörigen Prüffunktion der Absenderkomponente übertragen. Für die Empängerkomponente wird dann überprüft, ob das Ergebnis RST, das diese von der Absenderkomponente empfängt, dem Ergebnis RST entspricht, welches der Empfängerkomponente vorliegt. Dies ist möglich, da die Komponenten durch die erfolgte Identifikation mit den zugehörigen Datenabschnitten DA verknüpft sind.

Sind die Ergebnisse gleich, so wird in einem Abfrageschritt CPL? abgefragt, ob die Teilschritte bei der Abarbeitung der Aufgabe TSK vollständig erfolgt sind. Ist dies der Fall, ist das Verfahren zu Ende und kann mit einer neuen Aufgabe TSK gestartet werden. Ist dies nicht der Fall, so werden in einer Rekursion ein nächster Berechnungsschritt CLC_TSK und weitere erforderliche Übertragungsschritte TRS ausgeführt.

Sofern die Abfrage RST= ein negatives Ergebnis hat, wird eine Reparaturroutine gestartet, die ähnlich der oben angegebenen Optionen abläuft. In dem Schritt STR_AP wird das Applikationsprogramm AP gestoppt und vorzugsweis erfolgt ein Neustart des Applikationsprogramms. Dann wird die Abfrage RST= wiederholt. Wenn das Ergebnis RST in der Mehrheit der Ergebnisse der verwendeten Datenabschnitte DA entspricht, kann der Berechnungsschritt CLC_TSK oder der Übertragungsschritt TRS wiederholt werden. Entspricht das Ergebnis nicht der Mehrheit der Ergebnisse der anderen Datenabschnitte, kann der Hostrechner HR heruntergefahren und in einem Schritt STR_HR wieder hochgefahren werden. Es erfolgt ein Abfrageschritt, ob nun das Ergebnis RST der Mehrheit der Ergebnisse der Datenabschnitte DA entspricht. Ist dies der Fall, kann der Berechnungsschritt CLC_TSK oder Übertragungsschritt TRS wiederholt werden. Ist dies nicht der Fall, wird das Verfahren gestoppt. Es ist erforderlich, dass eine Wartungsaufgabe, beispielsweise durch einen Servicetechniker, durchgeführt wird (nicht dargestellt).

### Bezugszeichenliste

- LZ: Leitzentrale
- STW: Stellwerk
- RZ: Rechenzentrum
- GL: Gleis
- WH: Weiche
- WA: Weichenantrieb
- LS: Lichtsignal
- CL: Controller für Lichtsignal
- BL: Balise

- RU: Rechenumgebung
- HR1 ... HR3: Hostrechner
- SE1 ... SE3: Speichereinrichtung
- S1 ... S14: Schnittstelle
- CLD: Cloud
- RP1 ... RP8: Replikant
- AP1 ... AP5: Applikationsprogramm
- PK1 ... PK4: Programmkomplex
- KD1 ... KD13: Konfigurationsdaten
- MB: Message Broker
- TG: Taktgeber
- VT: Voter
- GW: Gateway
- KN: Knoten

- DF_DA: Bestimmungsschritt für Datenabschnitt
- DA: Datenabschnitt
- DF_DS: Bestimmungsschritt für Datensatz
- DS: Datensatz
- CPL?: Abfrage Schritte komplett?
- ID_HR: Identifizierungsschritt für Hostrechner
- ID_PK: Identifizierungsschritt für Programmkomplex
- ID_AP: Identifizierungsschritt für Applikationsprogramm
- ID_TP: Identifizierungsschritt für Teilprogramm
- DA>GID: Zuordnungsschritt für globalen ID Code
- HR,PK,AP,TP>ID: Zuordnungsschritt für Host/Komplex/Programm/Teilprogramm ID Code
- HID: Host ID Code
- KID: Komplex ID Code
- PID: Programm ID Code
- TIP: Teilprogramm ID Code
- CLC_HW: Berechnungsschritt für Hashwert
- DA>BF: Erstellungsschritt für Berechnungsfunktion
- BF: Berechnungsfunktion
- CLC_KC: Berechnungsschritt für Komplementärcode
- CLC_PF: Berechnungsschritt für Prüffunktion
- PF: Prüffunktion
- OT_PF: Ausgabeschritt Prozessgleichung
- TSK: Aufgabe
- SLC_DA: Auswahlschritt für Datenabschnitt
- SLC_PF: Auswahlschritt für Prozessfunktion
- CLC_RST: Berechnungsschritt Ergebnis Prozessgleichung
- RST: Ergebnis
- RST=GID: Abfrageschritt Ergebnis = globaler ID Code
- GID: Globaler ID Code
- RST=: Abfrageschritt alle Ergebnisse gleich?
- CLC_TSK: Berechnungsschritt für Aufgabe
- TRS: Übertragungsschritt für Daten
- RST=RST: Abfrageschritt Ergebnis Übertragungspartner gleich
- STR_AP: Neustart Applikationsprogramm
- STR_HR: Neustart Hostrechner

## Patentansprüche

1. Verfahren zum rechnergestützten Bearbeiten von Applikationen in einer Rechenumgebung (RU)
• mit mindestens einem Hostrechner (HR1 ... HR3),
• zum Ausführen einer Vielzahl von auf dem mindestens einen Hostrechner (HR1 ... HR3) installierten Applikationsprogrammen (AP1 ... AP4),
• unter Berücksichtigung von Konfigurationsdaten (KD) für die Applikationsprogramme, wobei zum Erstellen eines rechnergestützten Prüfalgorithmus für eine Bearbeitung der Applikationen
• für jedes Applikationsprogramm (AP1 ... AP4) die das Applikationsprogramm beschreibenden Daten als mindestens ein Datenabschnitt zusammengefasst werden und
• die auf das betreffende Applikationsprogramm (AP1 ... AP4) bezogenen Konfigurationsdaten (KD) als jeweils mindestens ein Datenabschnitt zusammengefasst werden,
• die Datenabschnitte der Vielzahl von Applikationsprogrammen (AP1 ... AP4) und der Konfigurationsdaten (KD) in einem Datensatz (DS) zusammengefasst werden,
bei der Erstellung des Prüfalgorithmus die Schritte durchgeführt werden, dass
• der Datensatz identifiziert wird und diesem ein globaler ID Code zuordnet wird,
• an der Ausführung der Applikationsprogramme (AP1 ... AP4) des Datensatzes (DS) beteiligte Komponenten der Rechenumgebung (RU) identifiziert werden, wobei
∘ dem als Komponente identifizierten Hostrechner (HR1 ... HR3) ein oder den als Komponenten identifizierten Hostrechnern (HR1 ... HR3) jeweils ein Host ID Code zugeordnet wird oder ein zugeordneter Host ID Code ausgelesen wird,
∘ den als Komponenten identifizierten Applikationsprogrammen (AP1 ... AP4) ein Programm ID Code zugeordnet oder ein zugeordneter Programm ID Code ausgelesen wird,
• auf jeden der im Datensatz enthaltenen Datenabschnitte (DA) eine Hashfunktion angewendet und jeweils ein Hashwert erzeugt wird,
• eine Berechnungsfunktion erstellt wird, die für jeden Datenabschnitt (DA) angewendet wird, indem
∘ die Host ID Codes von beteiligten Hostrechnern (HR1 ... HR3), die Programm ID Codes von beteiligten Applikationsprogrammen (AP1 ... AP4), der Hashwert des betreffenden Datenabschnitts und der globale ID Code durch Rechenoperatoren miteinander verknüpft werden,
∘ als Ergebnis der Berechnungsfunktion ein Komplementärcode (KC) berechnet und gespeichert wird,
• eine Prüffunktion erstellt wird, die für jeden Datenabschnitt anwendbar ist, indem
∘ die Host ID Codes der beteiligten Hostrechner (HR1 ... HR3), die Programm ID der beteiligten Applikationsprogramme, der Hashwert des betreffenden Datenabschnitts und der zum Datenabschnitt berechnete Komplementärcode durch Rechenoperatoren miteinander verknüpft werden,
∘ wobei als Ergebnis der globale ID Code berechenbar ist,
wobei der Prüfalgorithmus verwendet wird, um
• für einen Datenabschnitt das Ergebnis der zugehörigen Prüffunktion zu berechnen,
• das Ergebnis auszugeben oder mit dem globalen ID Code zu vergleichen und das Vergleichsergebnis auszugeben.

2. Verfahren nach Anspruch 1
**dadurch gekennzeichnet,**
**dass** mindestens ein Applikationsprogramm (AP1 ... AP4) eine Vielzahl von Teilprogrammen aufweist, wobei
• für jedes Teilprogramm die das Teilprogramm beschreibenden Daten jeweils als mindestens ein Datenabschnitt zusammengefasst werden und
• die auf das betreffende Teilprogramm bezogenen Konfigurationsdaten (KD) jeweils als mindestens ein Datenabschnitt zusammengefasst werden,
• jedem als Komponente identifizierten Teilprogramm ein Teilprogramm ID Code zugeordnet oder ein zugeordneter Teilprogramm ID Code ausgelesen wird,
• bei der Erstellung der Berechnungsfunktion und der Prüffunktion zusätzlich die Teilprogramm ID Codes von beteiligten Teilprogrammen durch einen Rechenoperator verknüpft wird.

3. Verfahren nach einem der voranstehenden Ansprüche,
**dadurch gekennzeichnet,**
**dass** mehrere Applikationsprogramme zu einem Programmkomplex (PK1 ... PK4) zusammengefasst werden, wobei
• für jeden Programmkomplex (PK1 ... PK4) die den Programmkomplex (PK1 ... PK4) beschreibenden Daten jeweils als mindestens ein Datenabschnitt zusammengefasst werden und
• die auf den betreffenden Programmkomplex (PK1 ... PK4) bezogenen Konfigurationsdaten (KD) jeweils als mindestens ein Datenabschnitt zusammengefasst werden,
• einem als Komponente identifizierten Programmkomplex (PK1 ... PK4) ein Komplex ID Code zugeordnet oder ein zugeordneter Komplex ID Code ausgelesen wird,
• bei der Erstellung der Berechnungsfunktion und der Prüffunktion zusätzlich die Komplex ID Codes von beteiligten Programmkomplexen (PK1 ... PK4) durch einen Rechenoperator verknüpft wird.

4. Verfahren nach einem der voranstehenden Ansprüche,
**dadurch gekennzeichnet,**
**dass** als Host ID Codes und/oder Programm ID Codes und/oder Teilprogramm ID Codes und/oder System ID Codes UUIDs verwendet werden.

5. Verfahren nach einem der voranstehenden Ansprüche,
**dadurch gekennzeichnet,**
**dass** als Hashfunktion ein MD5-Algorithmus verwendet wird.

6. Verfahren nach einem der voranstehenden Ansprüche,
**dadurch gekennzeichnet,**
**dass** die den Komponenten zugeordneten ID Codes und die erzeugten Hashwerte dieselbe Bit-Länge haben, wobei
• die Prüffunktion für jedes Bit der ID Codes und des Hashwertes aufgestellt wird,
• jeweils ein Komplementärbit berechnet wird,
• der Komplementärcode (KC) mit derselben Bit-Länge aus der Gesamtheit der Komplementärbits berechnet und gespeichert wird.

7. Verfahren nach Anspruch 6,
**dadurch gekennzeichnet,**
**dass** die ID Codes, der Hashwert und der Komplementärcode durch einen XOR-Operator miteinander verknüpft werden
• für jedes Applikationsprogramm (AP1 ... AP4) die das Applikationsprogramm beschreibenden Daten und die auf das betreffende Applikationsprogramm bezogenen Konfigurationsdaten (KD) jeweils als mindestens ein Datenabschnitt zusammengefasst sind,
• die Datenabschnitte der Vielzahl von Applikationsprogrammen (AP1 ... AP4) und der Konfigurationsdaten (KD) in einem Datensatz zusammengefasst sind,

8. Verfahren nach einem der voranstehenden Ansprüche,
**dadurch gekennzeichnet,**
**dass** mindestens ein Applikationsprogramm eine Vielzahl von Teilprogrammen aufweist, wobei
• für jedes Teilprogramm die das Teilprogramm beschreibenden Daten jeweils als mindestens ein Datenabschnitt zusammengefasst sind und
• die auf das betreffende Teilprogramm bezogenen Konfigurationsdaten (KD) als mindestens ein Datenabschnitt zusammengefasst sind,
• einem als Komponente identifizierten Teilprogramm ein Teilprogramm ID Code zugeordnet oder ein zugeordneter Teilprogramm ID Code ausgelesen sind,
• bei der Berechnung der Prüffunktion zusätzlich die Teilprogramm ID Codes von beteiligten Teilprogrammen durch einen Rechenoperator verknüpft sind.

9. Verfahren nach einem der voranstehenden Ansprüche,
**dadurch gekennzeichnet,**
**dass** mehrere Applikationsprogramme zu einem Programmkomplex (PK1 ... PK4) zusammengefasst werden, wobei
• für jeden Programmkomplex (PK1 ... PK4) die den Programmkomplex (PK1 ... PK4) beschreibenden Daten als jeweils mindestens ein Datenabschnitt zusammengefasst sind und
• die auf den betreffenden Programmkomplex (PK1 ... PK4) bezogenen Konfigurationsdaten (KD) als mindestens ein Datenabschnitt zusammengefasst sind,
• bei der Berechnung der Prüffunktion zusätzlich die Komplex ID Codes von beteiligten Programmkomplexen (PK1 ... PK4) durch einen Rechenoperator verknüpft sind.

10. Verfahren nach einem der voranstehenden Ansprüche,
**dadurch gekennzeichnet,**
**dass** von einem ersten der Applikationsprogramme (AP1 ... AP4) und/oder Teilprogramme und/oder Programmkomplexe (PK1 ... PK4) Daten an ein zweites der Applikationsprogramme und/oder Teilprogramme und/oder Programmkomplexe (PK1 ... PK4) übertragen werden, wobei
• die Daten zusammen mit dem Ergebnis der zugehörigen Prüffunktion übertragen werden,
• die Daten von dem zweiten der Applikationsprogramme (AP1 ... AP4) und/oder Teilprogramme und/oder Programmkomplexe (PK1 ... PK4), nur verarbeitet werden oder für Applikationen ab einem vorgegebenen Sicherheitslevel nur verarbeitet werden, wenn das mit den Daten übertragene Ergebnis der Prüffunktion des ersten der Applikationsprogramme und/oder Teilprogramme und/oder Programmkomplexe (PK1 ... PK4) mit dem Ergebnis der Prüffunktion des zweiten der Applikationsprogramme und/oder Teilprogramme und/oder Programmkomplexe (PK1 ... PK4) übereinstimmt.

11. Verfahren nach Anspruch 10,
**dadurch gekennzeichnet,**
**dass** das erste und das zweite der Applikationsprogramme (AP1 ... AP4) und/oder Teilprogramme und/oder Programmkomplexe (PK1 ... PK4) gestoppt oder der für diese Applikationsprogramme (AP1 ... AP4) und/oder Teilprogramme und/oder Programmkomplexe (PK1 ... PK4) identifizierte Hostrechner (HR1 ... HR3) heruntergefahren wird, wenn das mit den Daten übertragene Ergebnis der Prüffunktion des ersten der Applikationsprogramme und/oder Teilprogramme und/oder Programmkomplexe (PK1 ... PK4) mit dem Ergebnis der Prüffunktion, des zweiten der Applikationsprogramme und/oder Teilprogramme und/oder Programmkomplexe (PK1 ... PK4) nicht übereinstimmt.

12. Verfahren nach Anspruch 9 bis 11,
**dadurch gekennzeichnet,**
**dass** vor dem Starten eines Bearbeitungsprozesses, der eine Interaktion zwischen einer Vielzahl von Applikationsprogrammen (AP1 ... AP4) und/oder Teilprogrammen und/oder Programmkomplexen (PK1 ... PK4) beinhaltet, die Ergebnisse der Prüffunktionen dieser Vielzahl von Applikationsprogrammen und/oder Teilprogrammen und/oder Programmkomplexen (PK1 ... PK4) miteinander verglichen werden und
eine Übertragung von Daten zwischen Applikationsprogrammen (AP1 ... AP4) und/oder Teilprogrammen und/oder Programmkomplexen (PK1 ... PK4) nur zugelassen wird oder ab einem vorgegebenen Sicherheitslevel nur zugelassen wird, wenn alle Ergebnisse der Prüffunktion übereinstimmen

13. Verfahren nach Anspruch 12,
**dadurch gekennzeichnet,**
**dass**, wenn nicht alle Ergebnisse der Prüffunktion übereinstimmen, das mindestens eine Applikationsprogramm (AP1 ... AP4) und/oder das mindestens eine Teilprogramm und/oder der mindestens eine Programmkomplex (PK1 ... PK4), dessen Ergebnis der Prüffunktion von der Mehrheit der Ergebnisse der Prüffunktion abweicht, oder der für dieses mindestens eine Applikationsprogramm und/oder mindestens eine Teilprogramm und/oder mindestens diesen einen Programmkomplex (PK1 ... PK4) identifizierte Hostrechner (HR1 ... HR3) an der Ausführung dieses mindestens einen Applikationsprogramm und/oder mindestens einen Teilprogramm und/oder mindestens einen Programmkomplex (PK1 ... PK4) gehindert wird.

14. Verfahren einem der voranstehenden Ansprüche,
**dadurch gekennzeichnet,**
**dass** die den Komponenten zugeordneten ID Codes und die erzeugten Hashwerte dieselbe Bit-Länge haben, wobei
• die Prüffunktion für jedes Bit der ID Codes und des Hashwertes und des Komplementärcodes aufgestellt wird,
• jeweils ein Ergebnisbit berechnet wird,
• das Ergebnis Prüffunktion mit derselben Bit-Länge aus der Gesamtheit der Ergebnisbits berechnet und gespeichert wird.

15. Sicherheitsrelevante Rechenumgebung (RU) mit einem oder mehreren Hostrechnern
**dadurch gekennzeichnet,**
**dass** der Hostrechner (HR1 ... HR3) oder alle Hostrechner (HR1 ... HR3) dazu eingerichtet sind, ein Verfahren gemäß einem der voranstehenden Ansprüche durchzuführen.

16. Computerprogrammprodukt mit Programmbefehlen zur Durchführung des Verfahrens nach einem der Ansprüche 1-14.

## Claims

1. Method for computer-assisted processing of applications in a computing environment (RU)
• having at least one host computer (HR1 ... HR3),
• for executing a large number of application programs (AP1 ... AP4) installed on the at least one host computer (HR1 ... HR3),
• taking into account configuration data (KD) for the application programs,
wherein,
to create a computer-assisted test algorithm for processing of the applications,
• for each application program (AP1 ... AP4), the data describing the application program is combined as at least one data segment and
• the configuration data (KD) referring to the relevant application program (AP1 ... AP4) is combined as at least one data segment in each case,
• the data segments of the large number of application programs (AP1 ... AP4) and the configuration data (KD) are combined in a data set (DS),
during creation of the test algorithm the following steps are carried out:
• the data set is identified and a global ID code is assigned to it,
• components of the computing environment (RU) participating in the execution of the application programs (AP1 ... AP4) of the data set (DS) are identified, wherein
∘ one host ID code is assigned to the host computer (HR1 ... HR3) identified as the component, or one host ID cost is assigned to the host computers (HR1 ... HR3) identified as the components in each case, or an assigned host ID code is read out,
∘ a program ID code is assigned to the application programs (AP1 ... AP4) identified as the components, or an assigned program ID code is read out,
• a hash function is applied to each of the data segments (DA) contained in the data set, and one hash value in each case is generated,
• a calculation function is created, which is applied to each data segment (DA) in that
∘ the host ID codes of participating host computers (HR1 ... HR3), the program ID codes of participating application programs (AP1 ... AP4), the hash value of the relevant data segment and the global ID code are linked together by computational operators,
∘ as a result of the calculation function, a complementary code (KC) is calculated and stored,
• a test function is created, which can be applied to each data segment in that
∘ the host ID codes of the participating host computers (HR1 ... HR3), the program ID of the participating application programs, the hash value of the relevant data segment and the complementary code calculated for the data segment are linked together by computational operators,
∘ wherein as a result, the global ID code can be calculated,
wherein the test algorithm is used
• to calculate the result of the associated test function for a data segment,
• to output the result or to compare it with the global ID code and to output the comparison result.

2. Method according to claim 1,
**characterised in that**
at least one application program (AP1 ... AP4) has a large number of subprograms, wherein
• for each subprogram, the data describing the subprogram is combined as at least one data segment in each case and
• the configuration data (KD) referring to the relevant subprogram is combined as at least one data segment in each case,
• a subprogram ID code is assigned to each subprogram identified as a component or an assigned subprogram ID code is read out,
• during the creation of the calculation function and the test function, the subprogram ID codes of participating subprograms is additionally linked by a computational operator.

3. Method according to one of the preceding claims, **characterised in that**
a plurality of application programs are combined to form a program complex (PK1 ... PK4), wherein
• for each program complex (PK1 ... PK4), the data describing the program complex (PK1 ... PK4) is combined as at least one data segment in each case and
• the configuration data (KD) referring to the relevant program complex (PK1 ... PK4) is combined as at least one data segment in each case,
• a complex ID code is assigned to a program complex (PK1 ... PK4) identified as a component or an assigned complex ID code is read out,
• during creation of the calculation function and the test function, the complex ID codes of participating program complexes (PK1 ... PK4) is additionally linked by a computational operator.

4. Method according to one of the preceding claims,
**characterised in that**
UUIDs are used as the host ID codes and/or program ID codes and/or subprogram ID codes and/or system ID codes.

5. Method according to one of the preceding claims,
**characterised in that**
an MD5 algorithm is used as the hash function.

6. Method according to one of the preceding claims,
**characterised in that**
the ID codes assigned to the components and the generated hash values have the same bit length, wherein
• the test function is established for each bit of the ID codes and the hash value,
• one complementary bit in each case is calculated,
• the complementary code (KC) with the same bit length is calculated from the entirety of the complementary bits and stored.

7. Method according to claim 6,
**characterised in that**
the ID codes, the hash value and the complementary code are linked together by an XOR operator
• for each application program (AP1 ... AP4), the data describing the application program and the configuration data (KD) referring to the relevant application program are in each case combined as at least one data segment,
• the data segments of the large number of application programs (AP1 ... AP4) and the configuration data (KD) are combined in a data set,

8. Method according to one of the preceding claims,
**characterised in that**
at least one application program has a large number of subprograms, wherein
• for each subprogram, the data describing the subprogram is combined as at least one data segment in each case and
• the configuration data (KD) referring to the relevant subprogram is combined as at least one data segment,
• a subprogram ID code is assigned to a subprogram identified as a component or an assigned subprogram ID code is read out,
• during the calculation of the test function, the subprogram ID codes of participating subprograms is additionally linked by a computational operator.

9. Method according to one of the preceding claims,
**characterised in that**
a plurality of application programs is combined to form a program complex (PK1 ... PK4), wherein
• for each program complex (PK1 ... PK4), the data describing the program complex (PK1 ... PK4) is combined as at least one data segment in each case and
• the configuration data (KD) referring to the relevant program complex (PK1 ... PK4) is combined as at least one data segment,
• during calculation of the test function, the complex ID codes of participating program complexes (PK1 ... PK4) are additionally linked by a computational operator.

10. Method according to one of the preceding claims,
**characterised in that**
from a first of the application programs (AP1 ... AP4) and/or subprograms and/or program complexes (PK1 ... PK4), data is transferred to a second of the application programs and/or subprograms and/or program complexes (PK1 ... PK4), wherein
• the data is transferred together with the result of the associated test function,
• the data from the second of the application programs (AP1 ... AP4) and/or subprograms and/or program complexes (PK1 ... PK4) is only processed, or for applications above a predefined safety level is only processed, if the result of the test function of the first of the application programs and/or subprograms and/or program complexes (PK1 ... PK4) transferred with the data matches the result of the test function of the second of the application programs and/or subprograms and/or program complexes (PK1 ... PK4).

11. Method according to claim 10,
**characterised in that**
the first and the second of the application programs (AP1 ... AP4) and/or subprograms and/or program complexes (PK1 ... PK4) is stopped or the host computer (HR1 ... HR3) identified for these application programs (AP1 ... AP4) and/or subprograms and/or program complexes (PK1 ... PK4) is shut down if the result of the test function of the first of the application programs and/or subprograms and/or program complexes (PK1 ... PK4) transferred with the data does not match the result of the test function of the second of the application programs and/or subprograms and/or program complexes (PK1 ... PK4).

12. Method according to claim 9 to 11,
**characterised in that**
before starting a processing procedure, which includes an interaction between a large number of application programs (AP1 ... AP4) and/or subprograms and/or program complexes (PK1 ... PK4), the results of the test functions of this large number of application programs and/or subprograms and/or program complexes (PK1 ... PK4) are compared with each other and
a transmission of data between application programs (AP1 ... AP4) and/or subprograms and/or program complexes (PK1 ... PK4) is only permitted, or above a predefined safety level is only permitted, if all results of the test function match.

13. Method according to claim 12,
**characterised in that**
when not all results of the test function match, the at least one application program (AP1 ... AP4) and/or the at least one subprogram and/or the at least one program complex (PK1 ... PK4), whose result of the test function deviates from the majority of the results of the test function, or the host computer (HR1 ... HR3) identified for this at least one application program and/or at least one subprogram and/or at least this one program complex (PK1 ... PK4) is hindered in the execution of this at least one application program and/or at least one subprogram and/or at least one program complex (PK1 ... PK4).

14. Method according to one of the preceding claims,
**characterised in that**
the ID codes assigned to the components and the generated hash values have the same bit length, wherein
• the test function is established for each bit of the ID codes and the hash value and the complementary codes,
• one result bit in each case is calculated,
• the result test function with the same bit length is calculated from the entirety of the result bit and stored.

15. Safety-relevant computing environment (RU) having one or more host computer(s)
**characterised in that**
the host computer (HR1 ... HR3) or all host computers (HR1 ... HR3) is/are adapted to carry out a method according to one of the preceding claims.

16. Computer program product having program commands for carrying out the method according to one of claims 1 - 14.

## Revendications

1. Procédé de traitement assisté par ordinateur d'applications dans un environnement (RU) de calcul
• comprenant au moins un ordinateur (HR1 ... HR3) hôte,
• pour l'exécution d'une pluralité de programmes (AP1 ... AP4) d'application installés sur le au moins un ordinateur (HR1 ... HR3) hôte,
• en tenant compte de données (KD) de configuration pour les programmes d'application,
dans lequel,
pour la création d'un algorithme assisté par ordinateur de contrôle d'un traitement des applications,
• pour chaque programme (AP1 ... AP4) d'application, on rassemble les données décrivant le programme d'application sous la forme d'au moins un segment de données, et
• on rassemble les données (KD) de configuration rapportées au programme (AP1 ... AP4) d'application concerné sous la forme respectivement d'au moins un segment de données,
• on rassemble les segments de données de la pluralité des programmes (AP1 ... AP4) d'application et des données (KD) de configuration dans un ensemble (DS) de données,
lors de la création de l'algorithme de contrôle, on effectue les stades suivants, que
• l'on identifie l'ensemble de données et on lui affecte un code ID global,
• on identifie des composants de l'environnement (RU) de calcul faisant partie de l'exécution des programmes (AP1 ... AP4) d'application de l'ensemble (DS) de données, dans lequel
∘ on affecte à l'ordinateur (HR1 ... HR3) hôte, identifié comme composant, au un ou aux ordinateurs (HR1 ... HR3) hôtes, identifiés comme composants, respectivement, un code ID hôte ou on lit un code ID hôte affecté,
∘ aux programmes (AP1 ... AP4) d'application, identifiés comme composants, on affecte un code ID de programme ou on lit un code ID de programme affecté,
• sur chacun des segments (DA) de données contenus dans l'ensemble de données, on applique une fonction de hash et on produit respectivement une valeur de hash,
• on crée une fonction de calcul, que l'on applique à chaque segment (DA) de données, en
∘ combinant entre eux les codes ID hôtes d'ordinateurs (HR1 ... HR3) hôtes participants, les codes ID de programme de programmes (AP1 ... AP4) d'application participants, la valeur de hash du segment de données concerné et le code ID global par des opérations de calcul,
∘ comme résultat de la fonction de calcul, on calcule et on met en mémoire un code (KC) supplémentaire,
• on crée une fonction de contrôle, qui peut être appliquée à chaque segment de données, en
∘ combinant entre eux par des opérations de calcul les codes ID hôtes des ordinateurs (HR1 ... HR3) hôtes participants, l'ID de programme des programmes d'application participants, la valeur de hash du segment de données concerné et le code complémentaire calculé par rapport au segment de données,
∘ dans lequel comme résultat le code ID global peut être calculé,
dans lequel on utilise l'algorithme de contrôle, pour
• calculer pour un segment de données le résultat de la fonction de contrôle, qui lui appartient,
• donner le résultat ou comparer au code ID global et donner le résultat de la comparaison.

2. Procédé suivant la revendication 1,
**caractérisé**
**en ce qu'**au moins un programme (AP1 ... AP4) d'application a une pluralité de programmes partiels, dans lequel
• pour chaque programme partiel, on rassemble respectivement comme au moins un segment de données les données décrivant le programme partiel, et
• on rassemble respectivement comme au moins un segment de données les données (KD) de configuration rapportées au programme partiel concerné,
• à chaque programme partiel, identifié comme composant, on affecte un code ID de programme partiel ou on lit un code ID de programme partiel affecté,
• lors de la création de la fonction de calcul et de la fonction de contrôle, on combine supplémentairement les codes ID de programme partiel participants par un opérateur de calcul.

3. Procédé suivant l'une des revendications précédentes, **caractérisé**
**en ce que** l'on regroupe plusieurs programmes d'application en un complexe (PK1 ... PK4) de programme, dans lequel
• pour chaque complexe (PK1 ... PK4) de programme, on rassemble les données décrivant le complexe (PK1 ... PK4) de programme respectivement en au moins un segment de données, et
• on rassemble les données (KD) de configuration rapportées au complexe (PK1 ... PK4) de programme concerné respectivement comme au moins un segment de données,
• on affecte à un complexe (PK1 ... PK4), identifié comme composant, un code ID complexe ou on lit un code ID complexe affecté,
• lors de la création de la fonction de calcul et de la fonction de contrôle, on combine, par un opérateur de calcul, supplémentairement les codes ID complexes de complexes (PK1 ... PK4) de programme participants.

4. Procédé suivant l'une des revendications précédentes, **caractérisé**
**en ce que** l'on a utilisé comme codes ID hôtes et/ou comme codes ID de programme et/ou comme codes ID de programme partiels et/ou comme codes ID de système des UUIDs.

5. Procédé suivant l'une des revendications précédentes, **caractérisé**
**en ce que** l'on utilise comme fonction de hash un algorithme MD5.

6. Procédé suivant l'une des revendications précédentes, **caractérisé**
**en ce que** les codes ID affectés aux composants et les valeurs de hash produites ont la même longueur de bit, dans lequel
• on établit la fonction de contrôle pour chaque bit des codes ID et de la valeur de hash,
• on calcule respectivement un bit complémentaire,
• on calcule et met en mémoire le code (KC) complémentaire ayant la même longueur de bit dans l'ensemble des bits complémentaires.

7. Procédé suivant la revendication 6,
**caractérisé**
**en ce que**
l'on combine entre eux les codes ID, la valeur de hash et le code complémentaire par un opérateur XOR,
• pour chaque programme (AP1 ... AP4) d'application, on rassemble respectivement, comme au moins un segment de données, les données décrivant le programme d'application et les données (KD) de configuration rapportées au programme d'application concerné,
• on rassemble les segments de données de la pluralité de programmes (AP1 ... AP4) d'application et les données (KD) de configuration en un ensemble de données.

8. Procédé suivant l'une des revendications précédentes, **caractérisé**
**en ce qu'**au moins un programme d'application a une pluralité de programmes partiels, dans lequel
• pour chaque programme partiel, on rassemble les données décrivant le programme partiel respectivement comme au moins un segment de données, et
• on rassemble les données (KD) de configuration rapportées au programme partiel concerné comme au moins un segment de données,
• à un programme partiel, identifié comme composant, est affecté un code ID de programme partiel ou on lit un code ID de programme partiel affecté,
• lors du calcul de la fonction de contrôle, on combine supplémentairement les codes ID de programme partiels des programmes partiels participants par un opérateur de calcul.

9. Procédé suivant l'une des revendications précédentes, **caractérisé**
**en ce que** l'on rassemble plusieurs programmes d'application en un complexe (PK1 ... PK4) de programme, dans lequel
• pour chaque complexe (PK1 ... PK4) de programme, on rassemble les données, décrivant le complexe (PK1 ... PK4) de programme, comme respectivement au moins un segment de données, et
• on rassemble les données (KD) de configuration rapportées au complexe (PK1 ... PK4) de programme concerné comme au moins un segment de données,
• lors du calcul de la fonction de contrôle, on combine par un opérateur de calcul supplémentairement les codes ID de complexes (PK1 ... PK4) de programme participants.

10. Procédé suivant l'une des revendications précédentes, **caractérisé**
**en ce que** l'on transmet d'un premier des programmes (AP1 ... AP4) d'application et/ou de programmes partiels et/ou de complexes (PK1 ... PK4) de programme, des données à un deuxième des programmes d'application et/ou des programmes partiels et/ou des complexes (PK1 ... PK4) de programme, dans lequel
• on transmet les données ensemble avec le résultat de la fonction de contrôle associée,
• on ne traite les données du deuxième des programmes (AP1 ... AP4) d'application et/ou des programmes partiels et/ou des complexes (PK1 ... PK4) de programme ou on ne les traite pour des applications à partir d'un niveau de sécurité donné à l'avance, que si le résultat, transmis avec les données, de la fonction de contrôle du premier des programmes d'application et/ou des programmes partiels et/ou des complexes (PK1 ... PK4) de programme coïncide avec le résultat de la fonction de contrôle du deuxième des programmes d'application et/ou des programmes partiels et/ou des complexes (PK1 ... PK4) de programme.

11. Procédé suivant la revendication 10,
**caractérisé**
**en ce que** l'on arrête le premier et le deuxième des programmes (AP1 ... AP4) d'application et/ou des programmes partiels et/ou des complexes (PK1 ... PK4) de programme ou on ralentit l'ordinateur (HR1 ... HR3) hôte identifié pour ces programmes (AP1 ... AP4) d'application et/ou programme partiel et/ou complexe (PK1 ... PK4) de programme, si le résultat, transmis avec les données, de la fonction de contrôle du premier des programmes d'application et/ou des programmes partiels et/ou des complexes (PK1 ... PK4) de programme ne coïncide pas avec le résultat de la fonction de contrôle du deuxième des programmes d'application et/ou des programmes partiels et/ou des complexes (PK1 ... PK4) de programme.

12. Procédé suivant la revendication 9 à 11,
**caractérisé**
**en ce qu'**avant le début d'une opération de traitement, qui comporte une interaction entre une pluralité de programmes (AP1 ... AP4) d'application et/ou de programmes partiels et/ou de complexes (PK1 ... PK4) de programme, on compare entre eux les résultats des fonctions de contrôle de cette pluralité de programmes d'application et/ou de programmes partiels et/ou de complexes (PK1 ... PK4) de programme, et
on n'autorise la transmission de données entre des programmes (AP1 ... AP4) d'application et/ou des programmes partiels et/ou des complexes (PK1 ... PK4) de programme, que si tous les résultats de la fonction de contrôle coïncident.

13. Procédé suivant la revendication 12,
**caractérisé**
**en ce que**, lorsque tous les résultats de la fonction de contrôle ne coïncident pas, on fait obstacle à le au moins un programme (AP1 ... AP4) d'application et/ou à le au moins un programme partiel et/ou à le au moins un complexe (PK1 ... PK4) de programme, dont le résultat de la fonction de contrôle s'écarte de la majorité des résultats de la fonction de contrôle, ou l'on fait obstacle à ce que l'ordinateur (HR1 ... HR3) hôte, identifié pour ce au moins un programme d'application et/ou ce au moins un programme partiel et/ou ce au moins un complexe (PK1 ... PK4) de programme, exécute ce au moins un programme d'application et/ou ce au moins un programme partiel et/ou ce au moins un complexe (PK1 ... PK4) de programme.

14. Procédé suivant l'une des revendications précédentes, **caractérisé**
**en ce que** les codes ID affectés aux composants et les valeurs de hash produites ont la même longueur de bit, dans lequel
• on établit la fonction de contrôle pour chaque bit du code ID et de la valeur de hash et du code complémentaire,
• on calcule respectivement un bit de résultat,
• on calcule et met en mémoire le résultat de la fonction de contrôle ayant la même longueur de bit parmi l'ensemble des bits de résultat.

15. Environnement (RU) de calcul pertinent du point de vue de la sécurité, comprenant un ou plusieurs ordinateurs hôtes,
**caractérisé**
**en ce que** l'ordinateur (HR1 ... HR3) hôte ou tous les ordinateurs (HR1 ... HR3) hôtes sont agencés pour effectuer un procédé suivant l'une des revendications précédentes.

16. Produit de programme d'ordinateur comprenant des instructions de programme pour exécuter le procédé suivant l'une des revendications 1 à 14.
